# EUROPÄISCHE PATENTSCHRIFT

(11) **EP 4 189 618 B1**
(45) Veröffentlichungstag und Bekanntmachung des Hinweises auf die Patenterteilung: **04.11.2026**
(21) Anmeldenummer: 21754896.5
(22) Anmeldetag: 26.07.2021
(51) Int. Cl.: G06Q 10/08

(54) **SYSTEM UND VERFAHREN ZUR ERFASSUNG EINER WARENANZAHL IN EINEM LADUNGSTRÄGER**
SYSTEM AND METHOD FOR DETECTING A NUMBER OF GOODS IN A LOAD CARRIER
SYSTÈME ET PROCÉDÉ DE DÉTECTION D'UN CERTAIN NOMBRE DE MARCHANDISES DANS UN PORTE-CHARGE

(30) Priorität: 27.07.2020 AT 506392020
(43) Veröffentlichungstag der Anmeldung: 07.06.2023
(73) Patentinhaber: TGW Logistics GmbH, 4614 Marchtrenk (AT)
(72) Erfinder: MAHRINGER, Thomas, 4055 Pucking (AT)
(74) Vertreter: Burger, Hannes Alfred
(86) Internationale Anmeldenummer: PCT/AT2021/060259
(87) Internationale Veröffentlichungsnummer: WO 2022/020870

(56) Entgegenhaltungen:
- CA-A1- 3 093 312
- US-A1- 2017 136 632
- US-A1- 2019 329 410
- US-A1- 2020 134 828
- US-A1- 2020 218 865

## Beschreibung

Die Erfindung betrifft ein System zur Erfassung einer Warenanzahl in einem Ablagebereich eines Ladungsträgers in einem Warenlager, umfassend einen Analysebereich, in welchem der Ladungsträger bereitgestellt werden kann, ein Bilderfassungssystem zur Überwachung des Analysebereiches, eine Datenverarbeitungseinheit und eine Steuereinheit, wobei das Bilderfassungssystem dazu eingerichtet ist, ein Bild des Ablagebereiches des Ladungsträgers aufzunehmen und an die Datenverarbeitungseinheit zu übermitteln.

Ferner betrifft die Erfindung ein Datencenter zur Verwaltung von Datensätzen.

Darüber hinaus betrifft die Erfindung ein Lagersystem, umfassend eine Vielzahl von Ladungsträgern mit jeweils einem Ablagebereich, eine Fördervorrichtung zum Transport der Ladungsträger und ein System zur Erfassung einer Warenanzahl im Ablagebereich eines der Ladungsträger.

Schließlich betrifft die Erfindung ein Verfahren zur Erfassung einer Warenanzahl in einem Ablagebereich eines Ladungsträgers in einem Warenlager, wobei der Ladungsträger in einem Analysebereich bereitgestellt wird, wobei mittels eines Bilderfassungssystems ein Bild vom Ablagebereich des Ladungsträgers aufgenommen und an eine Datenverarbeitungseinheit übermittelt wird.

Im Rahmen eines Betriebs eines Warenlagers ist es erforderlich, eine Warenanzahl oder einen Füllzustand innerhalb eines Ladungsträgers zu ermitteln, beispielsweise um eine Inventur durchzuführen oder einen Kommissionierauftrag zu überprüfen. Um eine Warenanzahl abzuschätzen, kommen üblicherweise Vorrichtungen zum Einsatz, mit welchen diese aus einem Gesamtgewicht des Ladungsträgers oder bei stapelbaren Waren aus einer Stapelhöhe näherungsweise berechnet wird. Dies ist jedoch einerseits nur für sortenreine Ladungsträger möglich. Andererseits kann eine derartige gewichtsbasierte Ermittlung der Warenanzahl nur für Waren durchgeführt werden, welche ein großes Einzelgewicht aufweisen. Deshalb diese Methode insbesondere für Kleinwaren, wie beispielsweise Elektronikbauteile oder Schrauben nicht geeignet ist. Kleinwaren, insbesondere Elektronikbauteile wie Kondensatoren und dergleichen, sind häufig einzeln in Schutzverpackungen gehüllt, welche schwer im Vergleich zum Einzelgewicht der Kleinware ist. Dementsprechend kann es zu großen Schwankungen im Gewicht der Kleinwaren samt Schutzverpackung kommen, weshalb eine Abschätzung der Warenanzahl aus dem Gesamtgewicht nicht möglich bzw. nicht zuverlässig ist. Ferner kommen Vorrichtungen zum Einsatz, bei welchen eine Füllhöhe optisch erfasst wird, um eine Aussage über den Füllzustand zu treffen. Um eine exakte Warenanzahl zu erhalten, werden die Waren in der Regel manuell durch eine Person gezählt.

Der Begriff Warendaten umfasst unter anderem ein Eigengewicht, eine Abmessung, wie insbesondere eine Höhe, eine Form, eine Farbe der Ware und dergleichen. Unter dem allgemeinen Begriff Ladungsträger werden unter anderem Behälter, Kartons, Tablare und dergleichen verstanden. Solche Ladungsträger umfassen einen Ablageboden, an diesem aufragende Seitenwände und eine durch die Seitenwände begrenzte Beladeöffnung. Der Ablageboden bildet eine Ablagefläche aus, auf welcher die Waren abgelegt werden. Ladungsträger können sortenrein, also mit einer Vielzahl von Waren derselben Warentype (Sorte), oder gemischt, also mit einer Vielzahl von Waren unterschiedlicher Warentypen (Sorten), beladen sein.

Das Dokument DE 10 2010 001 569 A1 offenbart ein System zum Kommissionieren von Apothekenwaren, wobei die Waren in einem Füllschacht sortenrein gestapelt sind. Mit einer Kamera wird die Füllhöhe erfasst. Aus der Füllhöhe und einer bekannten Höhe der Einzelware wird die Warenanzahl im Füllschacht berechnet.

Die DE 10 2018 203 645 A1 beschreibt ein Verfahren zur Überwachung eines Kommissioniervorgangs, wobei ein erstes und zweites Kamerasystem vorgesehen sind, mit welchen zunächst ein Identifikationscode einer Ware erfasst und nach einer Platzierung der Ware in einem Ladungsträger ein Bild der Ware aus einer Vogelperspektive aufgenommen sowie eine Tiefenmessung durchgeführt wird.

Nachteilig ist bei derartigen Systemen, dass einerseits entweder die Identität der einzelnen Waren bekannt sein muss, um diese sukzessive zu erfassen, oder dass andererseits der Ladungsträger sortenrein beladen sein muss.

Aus der DE 10 2010 034 176 A1 ist ein Ladungsträger mit einem integrierten Kamerasystem bekannt. Auf Basis von unterschiedlichen Helligkeits- und Farbwerten innerhalb des Ladungsträgers wird die Füllhöhe ermittelt. Hierbei ist für jeden Ladungsträger ein eigenes Kamerasystem erforderlich.

Die US 2020/218865 A1 offenbart in diesem Zusammenhang weiterhin ein Robotersystem mit einem Gelenkarm und einem optischen Erfassungssystem zum Untersuchen eines Objekts. Zudem umfasst das System eine Vielzahl weiterer Erfassungssysteme, welche auf einen gemeinsamen Bereich gerichtet sind, in dem ein Objekt durch den Roboterarm positioniert werden kann. Dadurch kann eine Vielzahl von Ansichten des Objekts innerhalb des gemeinsamen Bereichs erfasst werden.

Die US 2019/329410 A1 offenbart darüber hinaus einen Roboterarm mit einem Greifer, ein optisches Erfassungssystem zum Erfassen der Identität, Position und Ausrichtung eines Objekts unter einer Vielzahl von Objekten. Mit dem Greifer kann das besagte Objekt in Folge ergriffen und an einen anderen Ort bewegt werden.

Die US 2020/134828 A1 offenbart schließlich ein Robotersystem, das mit Hilfe von Bilddaten und automatisierter Analyse eine sogenannte "Minimum Viable Region (MVR)" identifiziert, welche den kleinsten funktionalen Bereich darstellt, in dem ein Roboter eine bestimmte Aufgabe sicher und effizient ausführen kann. Das System nutzt dazu Sensordaten, Kanten-und Objektanalyse und Initiale Positionsdaten und verschiebt ein anfänglich unidentifiziert gebliebenes Objekt mit dem Roboter an eine andere Position.

Aufgabe der Erfindung ist es nun, ein verbessertes System zur Ermittlung der Warenanzahl bereitzustellen.

Weitere Aufgabe der Erfindung ist es, ein Datencenter zur Verwaltung von Datensätzen bereitzustellen, mit welchen das System zur Erfassung der Warenanzahl optimiert werden kann.

Darüber hinaus ist es Aufgabe der Erfindung ein Lagersystem mit einem erfindungsgemäßen System anzugeben.

Ferner ist es Aufgabe der Erfindung, ein verbessertes Verfahren zur Ermittlung der Warenanzahl anzugeben.

Die erste Aufgabe wird erfindungsgemäß dadurch gelöst, dass bei einem System der eingangs genannten Art
die Datenverarbeitungseinheit dazu eingerichtet ist, ein von dem Bilderfassungssystem übermitteltes Bild mittels eines Algorithmus zur Objekterkennung auszuwerten, um die im Ablagebereich des Ladungsträgers angeordneten Waren als Objekte zu erkennen und die Warenanzahl im Ablagebereich des Ladungsträgers zu ermitteln, wobei der Algorithmus zur Objekterkennung in der Datenverarbeitungseinheit mittels maschinellem Lernen implementiert ist, wobei für das maschinelle Lernen eine Vielzahl von Bildern von jeweils einem Ablagebereich eines Ladungsträgers mit jeweils unterschiedlicher Warenanzahl in die Datenverarbeitungseinheit eingespeist wird oder wurde und die einzelnen Bilder jeweils mit der zum jeweiligen Bild korrespondierenden Warenanzahl verknüpft sind, und
die Datenverarbeitungseinheit auf Basis der Warenanzahl eine Transportvorgabe für den Ladungsträger erstellt und an die Steuereinheit übermittelt, wobei die Steuereinheit dazu eingerichtet ist, eine Fördervorrichtung des Warenlagers anzusteuern, sodass die Fördervorrichtung den Ladungsträger gemäß der Transportvorgabe fördert, wobei die Fördervorrichtung als Gurtförderer oder als Rollenförderer ausgebildet ist oder fahrerlose Transportfahrzeuge umfasst.

Ein Vorteil der Erfindung ist insbesondere darin zu sehen, dass einzelne Waren im Ablagebereich des Ladungsträgers unabhängig von deren Anordnung, Orientierung, Abmessungen und/oder Warentyp (Sorte) erkannt und automatisch gezählt werden. Somit ist eine Ermittlung der Warenanzahl sowohl in einem sortenreinen Ladungsträger als auch in einem gemischt beladenen Ladungsträger ermöglicht. Darüber hinaus wird auch eine Ermittlung der Warenanzahl in einem Ladungsträger ermöglicht, welcher mit leichten Waren, beispielsweise mit Kleinwaren, wie Elektronikbauteile oder Schrauben, beladen ist. Ferner können die Waren ungeordnet bzw. in Wirrlage im Ablagebereich des Ladungsträgers, insbesondere einlagig oder zweilagig, angeordnet sein.

Hierfür wird zumindest ein Bild des Ablagebereiches des Ladungsträgers aufgenommen, um die im Ablagebereich angeordneten Waren abzubilden. Das Bild wird anschließend durch die Datenverarbeitungseinheit mittels Objekterkennung ausgewertet, wobei die Warenanzahl ermittelt wird, indem die einzelnen Waren als Objekte erkannt werden. Falls im Ablagebereich keine Objekte erkannt werden, so entspricht dies einer Warenanzahl von null bzw. einem unbeladenen Ladungsträger.

Eine einlagige oder zweilagige Anordnung der Waren im Ablagebereich ist besonders vorteilhaft, da eine Anzahl an Bildern für die Objekterkennung reduziert werden kann, zumal sämtliche im Ablagebereich angeordneten Waren mit einer reduzierten Anzahl an Bildern, insbesondere mit einem Bild aus einer Perspektive, abgebildet werden können. Somit kann eine Gesamtwarenanzahl aller im Ablagebereich angeordneten Waren ermittelt werden.

Mit dem erfindungsgemäßen System kann die Warenanzahl am Warenausgang und/oder am Wareneingang automatisiert erfasst werden. Überdies kann eine automatische Inventur realisiert werden.

Ferner kann mit dem System bei mehrlagig mit Waren beladenen Ladungsträgern auch eine Warenanzahl ermittelt werden, welche einer Teilwarenanzahl entsprechen kann. Hierbei umfasst die Warenanzahl (Teilwarenanzahl) jene Waren, welche durch darüber liegende Waren nicht vollständig verdeckt sind und somit vom Bilderfassungssystem abgebildet werden können. Dies sind bei mehreren, insbesondere zumindest zwei oder drei, Lagen von Waren, beispielsweise jene Waren, welche in einer obersten Lage oder in den oberen Lagen angeordnet und durch darüber liegende Waren nicht vollständig verdeckt sind.

Somit kann mit einem ersten System eine erste Warenanzahl (erste Teilwarenanzahl) vor einem Arbeitsplatz, insbesondere einer Kommissionierstation oder Auffüllstation, und mit einem zweiten System eine zweite Warenanzahl (zweite Teilwarenanzahl) nach dem Arbeitsplatz ermittelt werden. Eine Differenz zwischen der ersten Warenanzahl (ersten Teilwarenanzahl) und der zweiten Warenanzahl (zweiten Teilwarenanzahl) entspricht hierbei einer Anzahl an aus dem Ladungsträger entnommener Waren bzw. in dem Ladungsträger abgelegter Waren.

Der Analysebereich des Systems ist im Wesentlichen jener Bereich, in welchem der Ladungsträger zur Erfassung der Warenanzahl bereitgestellt wird und welcher vom Bilderfassungssystem einsehbar ist bzw. von diesem abgebildet werden kann.

Einzelne Waren werden von der Datenverarbeitungseinheit unabhängig von deren Warentyp (Sorte) als Objekte bzw. Einzelstücke erkannt. Es ist nicht zwingend erforderlich, dass die Waren identifiziert werden. Im Sinne der Erfindung umfasst ein Erkennen der Waren somit zumindest das Erfassen von einzelnen Waren als Objekte bzw. Einzelstücke. Ein Identifizieren der Waren umfasst zusätzlich zum Erkennen auch eine Zuordnung der Waren zu einer Warentype (Sorte).

Vorzugsweise weist der Ladungsträger (Behälter, Tablar, Karton) einen Ablageboden, an diesem aufragende Seitenwände und zumindest eine durch die Seitenwände begrenzte Beladeöffnung auf. Der Ladungsträger kann auch mehrere und durch die Seitenwände voneinander getrennte Aufnahmefächer aufweisen, wobei dann auch mehrere Beladeöffnungen vorhanden sind. Eine solcher Ladungsträger ist beispielweise durch einen fachunterteilten Behälter gebildet. Der Ablageboden bildet eine Ablagefläche aus. Der Ablageboden kann durch eine Bodenwandung oder ein Bodengitter gebildet sein. Der Ablagebereich ist nach unten durch die Ablagefläche und seitlich durch die Seitenwände begrenzt. Somit stellt der Ablagebereich ein Volumen dar, dessen Grundfläche durch die Ablagefläche ausgebildet ist. Es sei auch hingewiesen, dass der Ladungsträger lediglich den Ablageboden, aber keine Seitenwände und demzufolge auch keine Beladeöffnung umfassen kann. In diesem Fall ist der Ablagebereich lediglich durch die Ablagefläche definiert.

Grundsätzlich kann der Ladungsträger auch durch eine Hängetasche gebildet sein, wie sie beispielweise in der WO 2018/130712 A2 beschrieben ist. Der Ablagebereich ist durch eine Vorderwand, eine Rückwand und einen Boden des vorzugsweise ein biegeschlaffes (flexibles) Material, insbesondere ein Textil, umfassenden Taschenkörpers begrenzt.

Nach den genannten Ausführungen kann der Ladungsträger durch eine automatisierte Fördervorrichtung transportiert werden.

Besonders bevorzugt weist das System ein erstes Bilderfassungssystem zur Überwachung eines ersten Analysebereichs und ein zweites Bilderfassungssystem zur Überwachung eines zweiten Analysebereichs auf. Der erste Analysebereich kann hierbei einer Beladestation zum Beladen eines Ladungsträgers mit Waren und/oder Entladestation zum Entladen eines Ladungsträgers vorgelagert und der zweite Analysebereich kann der Beladestation und/oder Entladestation nachgelagert angeordnet sein. Somit kann beispielsweise ein Beladevorgang und/oder Entladevorgang überprüft werden, indem ein Bild des Ladungsträgers, insbesondere ein Ablagebereich des Ladungsträgers, vor und nach dem Beladevorgang und/oder Entladevorgang aufgenommen und ausgewertet wird.

Der Ladungsträger kann beispielsweise ein Quell-Ladungsträger sein. Der Quell-Ladungsträger ist in der Regel zur Lagerung einer Vielzahl von Waren in einem Warenlager ausgebildet. Die Waren werden mit dem Quell-Ladungsträger an einer Kommissionierstation zum Kommissionieren von Waren bereitgestellt.

Das System kann insbesondere derart ausgelegt sein, dass ein Ladungsträger jedes Mal wenn dieser im Analysebereich bereitgestellt wird, überprüft wird. Dadurch kann bereits bei einem vorangehenden Durchlauf erkannt bzw. vorausgesagt werden, dass bei einem nachfolgenden Durchlauf ein Problem auftreten wird, beispielsweise dass zu wenige Waren für einen nachfolgenden Auftrag im Quell-Ladungsträger vorhanden sind. Somit kann der Ladungsträger bereits vorsorglich zu einer Korrekturstation transportiert und/oder mit Waren aufgefüllt werden.

Alternativ kann der Ladungsträger beispielsweise ein Ziel-Ladungsträger sein, welcher an der Kommissionierstation bereitgestellt und mit Waren beladen wird. Hierbei kann das System insbesondere so ausgelegt sein, dass ein Bild des Ziel-Ladungsträgers, insbesondere ein Ablagebereich des Ziel-Ladungsträgers, vor und nach einem Beladevorgang aufgenommen und eine Differenz der Warenanzahl im Ziel-Ladungsträger ermittelt wird.

Beim Kommissionieren können Waren vom Quell-Ladungsträger in den Ziel-Ladungsträger umgeladen werden. Dies umfasst einen Entladevorgang zum Entladen der Waren aus dem Quell-Ladungsträger und einen Beladevorgang zum Beladen des Ziel-Ladungsträgers mit den Waren gemäß einem elektronisch erfassten Auftrag. Eine Kommissionierstation kann somit eine Entlade- und/oder Beladestation umfassen.

Um das System effizient zu betreiben und eine erfasste Datenmenge zu reduzieren, kann das System eine Auslöseeinheit umfassen, welche dazu eingerichtet ist, einen Voraussetzungsparameter für die Erfassung der Warenanzahl zu überprüfen. Hierbei kann vorgesehen sein, dass die Erfassung der Warenanzahl erst dann erfolgt, wenn der Voraussetzungsparameter einen bestimmten Schwellenwert erreicht.

So kann beispielsweise vorgesehen sein, dass der Voraussetzungsparameter ein Gesamtgewicht des Ladungsträgers umfasst. Hierbei kann vorgesehen sein, dass ein Schwellenwert ein bestimmtes Gesamtgewicht angibt, wobei die Erfassung der Warenanzahl durch das System erst ab einem Erreichen oder bei einem Unterschreiten des Schwellenwertes erfolgt. Der Schwellenwert kann beispielsweise durch ein Warehouse-Control-System (WCS) vorgegeben werden. Dadurch kann das System besonders effizient betrieben werden, ohne dass übermäßig viele Bilder erfasst und/oder Daten gesammelt werden. Ebenso kann der Voraussetzungsparameter eine bestimmte erwartete Warenanzahl im Ladungsträger umfassen. Die erwartete Warenanzahl kann beispielsweise vom Warehouse-Control-System (WCS) berechnet werden. Der Analysebereich kann entlang der automatisierten Fördervorrichtung angeordnet sein. Der Analysebereich kann durch einen Förderabschnitt der Fördervorrichtung gebildet sein. Die automatisierte Fördervorrichtung verbindet einen Warenanlieferbereich, Lagerbereich, zumindest einen Arbeitsplatz und gegebenenfalls eine Warenauslieferbereich. Das Warenlager umfasst den Warenanlieferbereich, den Lagerbereich mit Lagerplätzen, zumindest einen Arbeitsplatz und den Warenauslieferbereich. Der zumindest eine Arbeitsplatz kann eine Korrekturstation zur Korrektur einer Fehlbeladung oder Überprüfstation zur manuellen Überprüfung der Warenanzahl in einem Ladungsträger und dergleichen. Das System kann beispielsweise in einem Bereich des Wareneinganges, insbesondere zwischen einem Warenanlieferbereich und einem Lagerbereich, angeordnet sein. Somit kann eine Stückzahlkontrolle bzw. Warenanzahlkontrolle am Wareneingang erfolgen.

Darüber hinaus kann das System in einem Bereich des Warenausganges, vorzugsweise zwischen einem Kommissionierbereich und einem Warenauslieferbereich, angeordnet sein. Dadurch kann eine Stückzahlkontrolle bzw. Warenanzahlkontrolle am Warenausgang erfolgen.

Um eine automatisierte Inventur zu realisieren, kann das System im Warenlager angeordnet sein, wobei ein Ladungsträger temporär ausgelagert und im Analysebereich bereitgestellt werden kann, wobei die im Ablagebereich des Ladungsträgers vorhandene Stückzahl von Waren bzw. die Warenanzahl von dem System ermittelt wird.

Das Warenlager umfasst eine Fördervorrichtung, mit welcher der Ladungsträger im Analysebereich bereitgestellt bzw. aus diesem abgeführt werden kann. Die Fördervorrichtung ist als Gurtförderer oder als Rollenförderer (stationäre Fördervorrichtung) ausgebildet oder umfasst ein oder mehrere fahrerlose Transportfahrzeuge (mobile Fördervorrichtung), welche beispielsweise als autonome mobile Roboter ("autonomous mobile robot", AMR) oder automatisch geführte Transportfahrzeuge ("automated guided vehicle", AGV) ausgebildet sind.

Zweckmäßigerweise ist die Fördervorrichtung dazu ausgebildet, den Ladungsträger mit einer konstanten Geschwindigkeit, insbesondere durch den Analysebereich, zu befördern. Hierbei kann die Geschwindigkeit zumindest 1,5 m/s, vorzugsweise von 1,75 m/s bis 2,5 m/s, besonders bevorzugt 2 m/s, betragen.

Das Bilderfassungssystem ist so angeordnet, dass ein (zweidimensionales) Bild des Ablagebereiches aufgenommen werden kann, wobei der Ablagebereich und gegebenenfalls der Ladungsträger vollständig abgebildet wird. Hierfür ist eine Grundfläche des Aufnahmebereichs zumindest gleich groß wie, insbesondere größer als, die Ablagefläche des Ablagebereiches.

Für die Objekterkennung kann ein dem Ablagebereich entsprechender Bereich des (zweidimensionalen) Bildes als sogenannter Bereich von Interesse bzw. Region of Interest (ROI) definiert sein, welcher mittels Objekterkennung ausgewertet wird.

Ferner ist die Datenverarbeitungseinheit dazu eingerichtet, das aufgenommene Bild mittels Objekterkennung auszuwerten, wobei die Warenanzahl ermittelt wird. Der Algorithmus zur Objekterkennung ist in der Datenverarbeitungseinheit mittels maschinellem Lernen implementiert. Vorzugsweise ist die Objekterkennung mittels eines künstlichen neuronalen Netzwerks, insbesondere mittels eines Deep-Learning-Algorithmus oder eines modellbasierten Ansatzes, in der Datenverarbeitungseinheit implementiert. Die Datenverarbeitungseinheit bzw. der Algorithmus werden trainiert, indem eine Vielzahl von Bildern von Ablagebereichen, in welchen unterschiedlich viele Waren angeordnet sind, sowie zu jedem Bild eine korrespondierende Warenanzahl und optional weitere Warendaten, wie Form, Farbe, Abmessung und/oder Gewicht der Waren eingespeist werden. Ein Vorteil ist insbesondere darin zu sehen, dass die Datenverarbeitungseinheit eine Vielzahl verschiedener Waren unabhängig von deren Orientierung und/oder Warentype (Sorte) als Einzelstücke erkennen kann.

Das System weist eine Steuereinheit auf, und die Datenverarbeitungseinheit erstellt auf Basis der Warenanzahl eine Transportvorgabe für den Ladungsträger und übermittelt diese an die Steuereinheit. Durch die Transportvorgabe kann der Warenfluss im Warenlager effizient und automatisch gesteuert werden, beispielsweise indem der Ladungsträger gemäß der Transportvorgabe transportiert wird.

Die Transportvorgabe kann unter anderem ein Ziel für den Ladungsträger und/oder einen bestimmten Transportweg bzw. eine bestimmte Transportstrecke umfassen. Ein Ziel für den Ladungsträger kann ein bestimmter Ort im Warenlager, wie ein Lagerplatz im Lagerbereich, ein Arbeitsplatz oder dergleichen sein. Die Transportstrecke kann eine Förderstrecke, wie eine Hauptstrecke, Nebenstrecke, Ausschleusstrecke, Clearing-Strecke oder dergleichen entlang der Fördervorrichtung sein. Ferner kann vorgesehen sein, dass die Transportvorgabe eine Sollgeschwindigkeit umfasst, welche eine bestimmte Transportgeschwindigkeit für den Ladungsträger vorgibt. Somit kann beispielsweise eine Vielzahl von Ladungsträgern entlang des Transportweges bzw. der Förderstrecke verdichtet werden.

Es kann vorgesehen sein, dass die Datenverarbeitungseinheit und die Steuereinheit zwei separate Einheiten des Systems sind, welche über ein Kommunikationsmittel bzw. Datentransfermittel verbunden sind. Alternativ dazu kann vorgesehen sein, dass die Steuereinheit und die Datenverarbeitungseinheit zwei Untereinheiten einer Kontrolleinheit sind.

Bevorzugt kann es auch sein, dass die Transportvorgabe auf einem Vergleich der ermittelten Warenanzahl mit einer Sollvorgabe basiert. Dadurch können beispielsweise gezielte Transportvorgaben für unterschiedliche Füll- bzw. Beladungszustände verwirklicht werden. Ferner kann auch eine Fehlbeladung erkannt und eine entsprechende Transportvorgabe erstellt werden, gemäß welcher der Ladungsträger durch die Fördervorrichtung zu einem Arbeitsplatz transportiert wird, an dem eine Korrektur der Fehlbeladung durchgeführt wird. Die Korrektur der Fehlbeladung kann ein Hinzufügen einer Ware oder eine Entnahme einer Ware umfassen. Hierfür kann der Arbeitsplatz mit einer Eingabe- und Ausgabevorrichtung ausgestattet sein, wobei die Ausgabevorrichtung zur Anzeige einer im Ablagebereich erforderlichen Warenanzahl ausgebildet ist. Die Korrektur, insbesondere das Hinzufügen und/oder die Entnahme einer Ware, kann von einer Bedienperson oder einem Roboter durchgeführt und mittels der Eingabevorrichtung bestätigt werden.

Im einfachsten Fall umfasst die Sollvorgabe Füllzustände. Hierbei entspricht ein Unterschreiten der Sollvorgabe dem Füllzustand "unbeladen", somit könnte beispielsweise zwischen einem beladenen Ladungsträger und einem unbeladenen Ladungsträger unterschieden werden.

Die Sollvorgabe kann alternativ oder zusätzlich zumindest einen Sollwert umfassen.

Der zumindest eine Sollwert kann beispielsweise eine Mindestwarenanzahl oder eine Maximalwarenanzahl sein, wobei der Ladungsträger zu einem Arbeitsplatz, beispielsweise zu einer Korrekturstation, transportiert wird, wenn die Warenanzahl den Sollwert unterschreitet oder überschreitet. Somit kann beispielsweise mit einem ersten Sollwert bzw. der Mindestwarenanzahl und einem zweiten Sollwert bzw. der Maximalwarenanzahl ein tolerierbares Intervall für die Warenanzahl definiert werden.

Ferner kann der Sollwert eine im Ladungsträger erforderliche Warenanzahl angeben, wobei der Ladungsträger zu einem Arbeitsplatz transportiert wird, wenn die Warenanzahl von dem Sollwert abweicht.

Eine Abweichung der ermittelten Warenanzahl vom Sollwert kann auf eine Fehlbeladung des Ladungsträgers, beispielsweise eine Fehlkommissionierung, hindeuten.

Darüber hinaus kann (alternativ oder zusätzlich) die ermittelte Warenanzahl erfasst und in einer Datenbank hinterlegt werden, wonach der Ladungsträger wieder an einen Lagerplatz im Warenlager (insbesondere im Lagerbereich des Warenlagers) oder zur Überprüfstation transportiert wird.

Zusätzlich kann das System eine Feedbackvorrichtung umfassen, über welche eine fehlerhafte Ermittlung der Warenanzahl dem korrespondierenden erfassten Bild zugeordnet werden kann.

Die Steuereinheit ist dazu eingerichtet, eine Fördervorrichtung des Warenlagers anzusteuern, sodass die Fördervorrichtung den Ladungsträger gemäß der Transportvorgabe fördert.

Dadurch kann das System bzw. das Warenlager weiter automatisiert werden. Hierfür kann die Transportvorgabe beispielsweise eine Anweisung an die Fördervorrichtung umfassen, welche eine Weichenstellung oder dergleichen zum Ausschleusen des Ladungsträgers von der Hauptstrecke der Fördervorrichtung auf eine Nebenstrecke der Fördervorrichtung umfasst.

Mit Vorteil ist die Datenverarbeitungseinheit dazu eingerichtet, Warendaten mittels Objekterkennung zu erfassen und/oder Warendaten zu empfangen. Diese Warendaten können bei der Ermittlung der Warenanzahl oder zusätzlich zu der Warenanzahl bei der Erstellung der Transportvorgabe berücksichtigt werden. Dadurch kann die Objekterkennung optimiert und eine Effizienz der Steuerung des Warenflusses weiter erhöht werden.

Hierbei können Warendaten, welche mittels Objekterkennung erfasst werden, unter anderem eine Abmessung, eine Farbe, ein Qualitätszustand der Waren, wie beispielsweise Kratzer in einer Oberfläche einer Ware und/oder eine defekte Verpackung, einen Überlappungsgrad und/oder Orientierung der Waren im Ablagebereich umfassen. Darüber hinaus kann auch die Warenidentität, beispielsweise mittels eines an den Waren angeordneten Identifikationsmarkers, umfassend einen maschinenlesbaren Code, wie einen Strichcode, QR-Code oder dergleichen, erfasst werden.

Ferner können Prozessdaten, unter anderem eine Ladungsträgersequenz, Transportdaten, ein Gesamtgewicht des Ladungsträgers und/oder Stammdaten der Waren im Ablagebereich umfassen. Die Prozessdaten können beispielsweise von einem Lagerverwaltungssystem an die Datenverarbeitungseinheit übermittelt bzw. von einer zentralen Datenbank abgerufen werden.

Das Lagerverwaltungssystem kann ein Warenlager-Management-System (WMS) sein. Ferner kann das Lagerverwaltungssystem bzw. das WMS als Teil des Systems zur Erfassung der Warenanzahl ausgebildet oder diesem übergeordnet sein.

Transportdaten können unter anderem einen Ziel- und/oder Quellort des Ladungsträgers beinhalten. Stammdaten können eine Abmessung, eine Farbe, eine Form, ein Gewicht und dergleichen beinhalten.

Ist das System dazu eingerichtet, die Waren im Ablagebereich zu erkennen und darüber hinaus zu identifizieren, kann gegebenenfalls ein Vorhandensein einer Falschware im Ablagebereich des Ladungsträgers festgestellt und der Ladungsträger zu einem Arbeitsplatz transportiert werden.

Bevorzugt weist das Bilderfassungssystem eine erste Kamera auf, welche zur Aufnahme des Bildes aus einem ersten Winkel, insbesondere 90° zu einer Ablagefläche des Ladungsträgers, angeordnet ist. Dadurch kann das zumindest eine Bild aus einem ersten Blickwinkel, vorzugsweise aus einer Vogelperspektive aufgenommen werden. Der erste Winkel ist hierbei mit Vorteil so ausgewählt, dass der gesamte Ablagebereich erfasst werden kann, ohne dass Teilbereiche des Ablagebereiches verdeckt sind, beispielsweise durch die Seitenwände des Ladungsträgers. Der erste Winkel kann hierbei insbesondere vom verwendeten Ladungsträger abhängig sein. Bevorzugt beträgt der erste Winkel zwischen 40° und 100°, insbesondere 45°, 60° oder 90° zur Ablagefläche des Ladungsträgers.

Zweckmäßigerweise weist das Bilderfassungssystem zumindest eine weitere Kamera auf, welche zur Aufnahme zumindest eines weiteren Bildes des Ablagebereiches aus einem weiteren Winkel angeordnet ist, wobei der weitere Winkel vom ersten Winkel verschieden ist. Dadurch kann das zumindest eine weitere Bild aus einem weiteren Blickwinkel aufgenommen werden. Durch eine Analyse aus zumindest zwei Blickwinkel kann eine Präzision der Objekterkennung bzw. der Erfassung der Warenanzahl weiter erhöht werden, da beispielsweise auch übereinanderliegende Waren erkannt werden können, welche so von einer obersten Ware verdeckt sind, dass diese aus der Vogelperspektive nicht erfasst werden. Analog zum ersten Winkel kann auch der zweite Winkel vom verwendeten Ladungsträger abhängig sein. Bevorzugt beträgt der zweite Winkel zwischen 40° und 100°, insbesondere 45°, 60° oder 90° zur Ablagefläche des Ladungsträgers.

Die erste Kamera und/oder die zumindest eine weitere Kamera sind bevorzugt als Flächenkameras, insbesondere mit einer Auflösung von zumindest 10 Megapixel, vorzugsweise 15 bis 20 Megapixel, ausgebildet.

Mit Vorteil ist vorgesehen, dass das System zumindest eine Erfassungseinheit zur Erfassung von zumindest einem Ladungsträgerparameter, vorzugsweise einem Gesamtgewicht des Ladungsträgers, aufweist, wobei die Erfassungseinheit den zumindest einen Ladungsträgerparameter an die Datenverarbeitungseinheit übermittelt und die Datenverarbeitungseinheit vorzugsweise dazu eingerichtet ist, den Ladungsträgerparameter bei einer Auswertung des Bildes zu berücksichtigen. Eine Berücksichtigung des Ladungsträgerparameters kann beispielsweise bei der Ermittlung der Warenanzahl und/oder bei der Erstellung der Transportvorgabe erfolgen. Dadurch kann die Objekterkennung und/oder die Steuerung des Warenflusses weiter optimiert werden. Das Gesamtgewicht des Ladungsträgers umfasst das Leergewicht des Ladungsträgers und gegebenenfalls das Gewicht der Waren im Ablagebereich.

Die zumindest eine Erfassungseinheit kann beispielsweise als
Wiegevorrichtung zur Erfassung des Gesamtgewichtes des Ladungsträgers,
Strich- oder QR-Code Scanner zur Erfassung der Waren- und/oder Ladungsträgeridentität,
RFID-Lesegerät zur Erfassung der Waren- und/oder Ladungsträgeridentität, und/oder
optische Messeinrichtung zur Erfassung der Abmessungen des Ladungsträgers, der Abmessungen der Waren und/oder einer Füllhöhe,
ausgebildet sein.

Günstig ist es, wenn die Datenverarbeitungseinheit über ein Kommunikationsmodul mit einem Datencenter verbunden ist. Das Kommunikationsmodul kann zum, insbesondere drahtlosen, Datentransfer zwischen der Datenverarbeitungseinheit und dem Datencenter ausgebildet sein. Hierfür umfasst das Kommunikationsmodul vorzugsweise eine Sende- und Empfangseinrichtung. Zweckmäßigerweise umfasst das Datencenter eine korrespondierende Sende- und Empfangseinrichtung. Ferner kann das Datencenter eine Datensammlung, wie beispielsweise eine Datenbank, eine Daten-Cloud, ein Data-Warehouse bzw. Datenlager und/oder einen Data-Lake bzw. Datensee umfassen.

Mit Vorteil ist die Datenverarbeitungseinheit dazu ausgebildet, einen Datensatz, vorzugsweise umfassend ein Bild des Ablagebereiches und/oder die ermittelte Warenanzahl, an das Datencenter zu übermitteln und/oder von diesem zu empfangen, wobei die Datenverarbeitungseinheit die Objekterkennung anhand von empfangenen Datensätzen optimiert. Somit kann einerseits der Datensatz zentral gespeichert werden. Andererseits können hinterlegte Datensätze empfangen werden. Anhand der hinterlegten Datensätze kann die Objekterkennung optimiert bzw. trainiert werden. Die hinterlegten Datensätze können manuell oder vom System zu einem früheren Zeitpunkt hinterlegt worden sein. Bevorzugt stammen die hinterlegten Datensätze von anderen gleichartigen, beispielsweise parallel betriebenen, Systemen, wodurch unterschiedliche Systeme im Wesentlichen voneinander lernen können. Überdies können die Datensätze eine, insbesondere vorab erstellte, Transportvorgabe, Stammdaten der abgebildeten Waren und dergleichen umfassen. Abhängig von einer Beladungsdichte des Ladungsträgers kann das Bild des Ablagebereiches eine Ablagefläche, insbesondere einen Ablageboden, des Ladungsträgers und/oder Waren am Boden des Ladungsträgers zeigen.

Im Datencenter hinterlegte Datensätze können von der Datenverarbeitungseinheit aktiv empfangen, also nach einer Anforderung durch die Datenverarbeitungseinheit bzw. heruntergeladen, oder passiv empfangen werden, wobei beim passiven Empfangen die Datensätze vom Datencenter, vorzugsweise ohne vorangehender Anforderung durch die Datenverarbeitungseinheit, an die Datenverarbeitungseinheit übermittelt werden.

Die weitere Aufgabe wird erfindungsgemäß dadurch gelöst, dass bei einem Datencenter der eingangs genannten Art die Datensätze jeweils zumindest ein Bild von einem Ablagebereich eines Ladungsträgers und eine ermittelte Warenanzahl umfassen, wobei die ermittelte Warenanzahl eine Anzahl von Waren im Ablagebereich angibt und das Datencenter über ein Kommunikationsmodul mit einer Vielzahl von Systemen nach einem der zuvor beschriebenen Aspekte zum Transfer von Datensätzen zwischen jeweils einem System und dem Datencenter verbunden ist.

Ein damit erzielter Vorteil ist insbesondere darin zu sehen, dass Datensätze von einer Vielzahl von Systemen zentral verwaltet und abgespeichert werden können und somit für die mit dem Datencenter verbundenen Systeme verfügbar sind. Dadurch können die Systeme stetig unter Einbeziehung von erfassten Daten und Bildern anderer Systeme optimiert und verbessert werden. Die einzelnen mit dem Datencenter in Verbindung stehenden Systeme können somit im Wesentlichen voneinander lernen und sich gegenseitig optimieren, wodurch eine erhöhte Effizienz und Genauigkeit der einzelnen Systeme erzielt wird. Dem Datencenter ist hierfür vorzugsweise ein elektronischer Speicher zugeordnet.

Ferner kann vorgesehen sein, dass das Datencenter hinterlegte Datensätze an das System übermittelt, um so eine Optimierung der Objekterkennung zu triggern bzw. zu steuern. Optional kann vorgesehen sein, dass das Datencenter hinterlegte Datensätze nach Anforderung durch das System an dieses übermittelt. Somit kann die Optimierung der Objekterkennung durch das System getriggert bzw. gesteuert sein.

Das übergeordnete Datencenter kann hierfür beispielsweise als digitale Plattform ausgebildet sein, sodass eine Vielzahl von vorangehend beschriebener Systeme über das Datencenter vernetzt sind. Die mit dem Datencenter verbundenen Systeme können an einem Standort bzw. in einem Warenlager oder an einer Vielzahl unterschiedlicher Standorte bzw. Warenlager installiert sein.

Hierbei können die Systeme zur Überwachung und Steuerung eines Warenflusses in einem Warenlager jeweils über eine bidirektionale Kommunikationsverbindung mit dem Datencenter verbunden sein. Die bidirektionale Kommunikationsverbindung ermöglicht einen Datentransfer vom System an das Datencenter sowie vom Datencenter zum System. Hierfür können die Systeme jeweils ein erstes Kommunikationsmodul und das Datencenter ein zweites Kommunikationsmodul umfassen. Das erste Kommunikationsmodul eines Systems kann eine eigenständige Einheit oder ein integraler Bestandteil der Datenverarbeitungseinheit sein.

Dadurch können die mit dem Datencenter verbundenen bzw. vernetzten Systeme individuell Datensätze hochladen und/oder im Datencenter hinterlegte Datensätze empfangen bzw. herunterladen.

Die ermittelte Warenanzahl kann von einem der Systeme ermittelt worden sein. Alternativ kann die ermittelte Warenanzahl auch eine manuell ermittelte Warenanzahl sein. Hierfür kann die Anzahl der Waren auf vorhandenen Bildern von Ablagebereichen manuell gezählt oder manuell generiert werden, indem eine bestimmte und dementsprechend bekannte Anzahl an Waren in einem Ablagebereich eines Ladungsträgers abgelegt werden und anschließend ein Bild von diesem Ablagebereich erfasst wird.

Mit Vorteil ist vorgesehen, dass ein Algorithmus zum maschinellen Lernen im Datencenter implementiert ist, in welchen die Datensätze eingespeist werden können, um einen Algorithmus zur Objekterkennung zu verbessern. Hierbei können aufgenommene Bilder und/oder erfasste Warenanzahlen von einer Vielzahl von Systemen in den Algorithmus zum maschinellen Lernen bzw. Machine-Learning-Algorithmus eingespeist werden, um den Algorithmus zur Objekterkennung zu verbessern. Der verbesserte Algorithmus zur Objekterkennung kann vom Datencenter auf die Datenverarbeitungseinheiten der mit dem Datencenter verbundenen Systeme eingespeist werden. Ein Vorteil ist hierbei insbesondere darin zu sehen, dass die einzelnen Datenverarbeitungseinheiten mit geringerer Rechenleistung ausgebildet sein können, da eine Verbesserung des Algorithmus zur Objekterkennung zentral erfolgen kann.

Die Datensätze können zusätzlich Warendaten, vorzugsweise Stammdaten der Waren, wie unter anderem Abmessungen, das Einzelgewicht, eine Form, eine Formstabilität und/oder eine Farbe der Waren, eine hinterlegte Anzahl der Waren im Ladungsträger, eine, insbesondere empirisch ermittelte, Bestellhäufigkeit und/oder Ein- bzw. Auslagerungsfrequenz der Waren umfassen. Die Formstabilität kann bei Waren, insbesondere in Abhängigkeit von deren Verpackung, variieren. So weisen beispielsweise in Polybags verpackte Kleidungsstücke eine geringe Formstabilität auf, während in Kartons verpackte Waren eine hohe Formstabilität aufweisen.

Die weitere Aufgabe wird unter Ausnutzung der zuvor beschriebenen Vorteile und Wirkungen erfindungsgemäß dadurch gelöst, dass bei einem Lagersystem der eingangs genannten Art das System nach einem der zuvor beschriebenen Aspekte ausgebildet ist.

Ferner wird die verfahrensmäßige Aufgabe dadurch gelöst, dass bei einem Verfahren der eingangs genannten Art das Bild durch die Datenverarbeitungseinheit mittels eines Algorithmus zur Objekterkennung ausgewertet wird, wobei Waren, welche im Ablagebereich angeordnet sind, als Objekte erkannt und eine Warenanzahl automatisch ermittelt werden, wonach der Ladungsträger aus dem Analysebereich gefördert wird. Der Algorithmus zur Objekterkennung in der Datenverarbeitungseinheit ist dabei mittels maschinellem Lernen implementiert, wobei für das maschinelle Lernen eine Vielzahl von Bildern von jeweils einem Ablagebereich eines Ladungsträgers mit jeweils unterschiedlicher Warenanzahl in die Datenverarbeitungseinheit eingespeist wird oder wurde und die einzelnen Bilder jeweils mit der zum jeweiligen Bild korrespondierenden Warenanzahl verknüpft sind. Die Datenverarbeitungseinheit erstellt auf Basis der Warenanzahl eine Transportvorgabe für den Ladungsträger und übermittelt diese an eine Steuereinheit des Systems, wobei die Steuereinheit eine Fördervorrichtung des Warenlagers ansteuert, sodass die Fördervorrichtung den Ladungsträger gemäß der Transportvorgabe fördert. Die Fördervorrichtung ist als Gurtförderer oder als Rollenförderer ausgebildet oder umfasst fahrerlose Transportfahrzeuge.

Ein Vorteil des erfindungsgemäßen Verfahrens ist vor allem darin zu sehen, dass einzelne Waren im Ablagebereich des Ladungsträgers unabhängig von deren Anordnung und Warentype (Sorte) erkannt und automatisch gezählt werden. Somit kann die Warenanzahl sowohl in einem sortenreinen Ladungsträger als auch in einem gemischt beladenen Ladungsträger schnell ermittelt werden, wodurch unter anderem eine automatisierte Überprüfung der Warenanzahl bzw. eine automatisierte Inventur ermöglicht wird. Dadurch können etwa menschliche Fehler bei einer manuellen Überprüfung oder Inventur vermieden und die Effizienz des Lagerbetriebs gesteigert werden. Hierfür werden die Waren im Ablagebereich des Ladungsträgers erkannt und automatisch gezählt.

Um das Verfahren effizient durchzuführen und eine erfasste Datenmenge zu reduzieren, kann vorgesehen sein, dass ein Voraussetzungsparameter, insbesondere ein Gesamtgewicht des Ladungsträgers und/oder eine erwartete Warenanzahl im Ladungsträger, überprüft wird und das Bild vom Ablagebereich des Ladungsträgers lediglich dann aufgenommen wird, wenn der Voraussetzungsparameter einen definierten Schwellenwert erreicht, unter diesem liegt oder über diesem liegt.

Auf Basis der ermittelten Warenanzahl wird eine Transportvorgabe für den Ladungsträger erstellt, gemäß welcher der Ladungsträger gefördert wird. So kann der Warenfluss im Wesentlichen abhängig vom Füllstand in einem Ladungsträger gesteuert und das Warenlager somit besonders effizient betrieben werden.

Zweckmäßigerweise wird der Ladungsträger mit einer konstanten Geschwindigkeit durch den Analysebereich bewegt, wobei das Bild aufgenommen wird. Die Warenanzahl kann somit im laufenden Betrieb erfasst werden, weshalb es nicht erforderlich ist, dass der Ladungsträger im Analysebereich angehalten wird. Dadurch wird ein besonders effizienter und schneller Betrieb des Warenlagers ermöglicht.

Das Bild des Ablagebereiches wird hierbei insbesondere mit kurzer Belichtungszeit, beispielsweise mit einer Belichtungszeit von 0,3 ms bis 15 ms, vorzugsweise von maximal 1 ms, aufgenommen. Mit Vorteil ist die Belichtungszeit so gewählt, dass ein Bild des Ablagebereiches eines Ladungsträgers aufgenommen werden kann, welcher mit einer Geschwindigkeit von zumindest 0,5 m/s, von 1 m/s bis 3 m/s, besonders bevorzugt mit etwa 2 m/s, durch den Analysebereich bewegt wird.

Günstig ist es, wenn das Bild in Echtzeit ausgewertet und die Transportvorgabe in Echtzeit generiert wird. Somit kann der Ladungsträger durch den Analysebereich und aus diesem hinausbewegt werden, ohne dass der Ladungsträger im Analysebereich angehalten werden muss. Die Transportvorgabe wird in Echtzeit generiert und ist somit bereits verfügbar, wenn der Ladungsträger den Analysebereich verlässt.

Vorteilhaft ist es, wenn die Warenanzahl mit einem Sollwert verglichen wird, wobei der Ladungsträger zu einem Arbeitsplatz transportiert wird, wenn der Sollwert unterschritten oder überschritten wird, oder zu einem Lagerplatz oder Warenausgang transportiert wird, wenn die Warenanzahl dem Sollwert entspricht. Somit kann beispielsweise für Kundenaufträge gewährleistet werden, dass nur Ladungsträger, für welche eine ordnungsgemäße bzw. auftragsgemäße Befüllung festgestellt wird, am Lagerplatz eingelagert bzw. zum Warenausgang transportiert werden.

Hierbei kann der Sollwert mit einer erlaubten Abweichung definiert werden, gemäß welchem die Transportvorgabe erstellt wird. Eine erlaubte Abweichung kann beispielsweise 1 %, 2 %, 5 % oder 10 % betragen.

Ebenso kann vorgesehen sein, dass ein Überschreiten erlaubt ist und der Ladungsträger lediglich zum Arbeitsplatz transportiert wird, wenn der Sollwert unterschritten wird, oder umgekehrt.

Zweckmäßigerweise wird ein Gesamtgewicht des Ladungsträgers mit einer Wiegevorrichtung erfasst und an die Datenverarbeitungseinheit übermittelt, wonach die Warenanzahl im Ablagebereich des Ladungsträgers aus einem bekannten Einzelgewicht der Waren und einem bekannten Leergewicht des Ladungsträgers berechnet und bei der Erfassung der Warenanzahl berücksichtigt wird. Dadurch kann bei der Erfassung der Warenanzahl eines sortenreinen Ladungsträgers die Genauigkeit beim Erfassen der Warenanzahl zusätzlich erhöht werden. Das Einzelgewicht der Waren kann vorab durch Wiegen einer Einzelware ermittelt werden oder beispielsweise aus Herstellerangaben bekannt sein. Vorzugsweise ist das Einzelgewicht der Waren in den Warendaten hinterlegt. Durch den optional am Ladungsträger angeordneten Identifikationsmarker kann der Ladungsträger identifiziert und die darin abgelegten Waren sowie die hierzu korrespondierenden Warendaten abgerufen werden, wodurch das Einzelgewicht der Waren bekannt ist.

Analog dazu kann das Leergewicht des Ladungsträgers vorab durch Wiegen des leeren Ladungsträgers ermittelt werden oder beispielsweise aus Herstellerangaben bekannt sein. Vorzugsweise ist das Leergewicht des Ladungsträgers mit dem optional am Ladungsträger angeordneten Identifikationsmarker verknüpft und in einem elektronischen Datenspeicher, welcher beispielsweise dem Warenlager-Management-System oder der Datenverarbeitungseinheit zugeordnet ist, hinterlegt. Durch den Identifikationsmarker kann der Ladungsträger identifiziert und somit dessen Leergewicht abgerufen werden.

Hierbei kann die aus dem Gesamtgewicht des Ladungsträgers berechnete Warenanzahl mit der mittels Objekterkennung ermittelten Warenanzahl verglichen werden. Liegt eine Abweichung zwischen der berechneten Warenanzahl und der ermittelten Warenanzahl, insbesondere über ein bestimmtes Toleranzintervall hinaus, vor, so kann der Ladungsträger zu einem Arbeitsplatz, beispielsweise zu einer Überprüfstation, ausgeschleust werden, an welcher die Warenanzahl durch eine Bearbeitungsperson überprüft wird, indem die Waren manuell gezählt werden. Die manuell gezählte Warenanzahl kann ebenfalls an die Datenverarbeitungseinheit übermittelt werden, sodass die manuell gezählte Warenanzahl mit dem aufgenommenen Bild datentechnisch/elektronisch verknüpft werden kann. Somit kann etwa ein sogenanntes "Supervised Learning" zur Optimierung der Objekterkennung im laufenden Betrieb realisiert werden.

Es kann bevorzugt vorgesehen sein, dass der Algorithmus zur Objekterkennung mittels maschinellen Lernens in einem Teaching-Schritt anhand von vorhandenen Warendaten und/oder hinterlegten Bildern von Ablagebereichen von Ladungsträgern optimiert wird, indem eine Vielzahl von Bildern von Ablagebereichen oder eine Vielzahl von Bildern von Ablagebereichen und zu den Bildern korrespondierende Warenanzahlen in eine Recheneinheit eingespeist werden, auf welcher Recheneinheit der Algorithmus zur Objekterkennung implementiert ist, wonach ein Testlauf durchgeführt wird, bei welchem eine Vielzahl von Bildern von Ablagebereichen in die Recheneinheit eingespeist werden und die korrespondierende Warenanzahl durch die Recheneinheit mittels des Algorithmus zur Objekterkennung ermittelt wird. Hierbei kann die Datenverarbeitungseinheit die Recheneinheit umfassen. Alternativ kann das Datencenter die Recheneinheit umfassen. Die Recheneinheit kann ebenso eine eigenständige Einheit, beispielsweise ein Computer, sein, auf welcher der Teaching-Schritt durchgeführt wird.

Ein im Teaching-Schritt optimierter Algorithmus zur Objekterkennung kann anschließend auf eine Datenverarbeitungseinheit des Systems eingespeist werden.

Für das maschinelle Lernen bzw. Machine-Learning wird eine Vielzahl von Bildern, insbesondere zumindest 10000 Bilder, vorzugsweise etwa 2500 Bilder, von jeweils einem Ablagebereich eines Ladungsträgers mit jeweils unterschiedlicher Warenanzahl in die Datenverarbeitungseinheit eingespeist bzw. an diese übermittelt. Die einzelnen Bilder sind jeweils mit der zum jeweiligen Bild korrespondierenden Warenanzahl verknüpft. Somit kann die Datenverarbeitungseinheit vorab bzw. vor Inbetriebnahme des Warenlagers und optional auch während Betriebs- und/oder Wartungspausen anhand dieser Bilder trainiert und die Objekterkennung optimiert werden.

Nach dem Teaching-Schritt kann das System in einem Testlauf getestet werden, indem die Warenanzahl bei einer Vielzahl von Ladungsträgern mit bekannter Warenanzahl durch das System ermittelt wird. Dies kann durch ein Einspeisen von Bildern erfolgen, welche durch die Datenverarbeitungseinheit ausgewertet werden. Somit muss für den Testlauf nicht das gesamte System in Betrieb genommen werden.

Die zu den einzelnen Bildern korrespondierende Warenanzahl kann vorab manuell gezählt werden oder die Bilder für den Testlauf durch gezieltes Ablegen einer bestimmten Warenanzahl im Ablagebereich und anschließende fotografische Aufnahme des Ablagebereiches generiert werden, sodass die auf den Bildern ersichtliche Warenanzahl bekannt ist.

Liegt beim Testlauf eine Trefferrate unter einem gewünschten Wert, beispielsweise unter 80%, so kann der Teaching-Schritt mit weiteren Bildern wiederholt werden, bis die Trefferrate zumindest den gewünschten Wert erreicht. Als Trefferrate wird ein Anteil der im Testlauf überprüften Ladungsträger bezeichnet, bei welchen die ermittelte Warenanzahl mit der bekannten Warenanzahl übereinstimmt.

Mit Vorteil wird die Objekterkennung der Datenverarbeitungseinheit im laufenden Betrieb mittels maschinellen Lernens anhand von zentral gespeicherten Bildern und zu diesen korrespondierenden Warenanzahlen optimiert. Für das maschinelle Lernen können insbesondere im Datencenter gespeicherte Bilder und zu diesen korrespondierende Warenanzahlen an die Datenverarbeitungseinheit übermittelt bzw. von dieser abgerufen werden. Die im Datencenter gespeicherten Bilder können von einem einzelnen System, von mehreren derartigen Systemen in einem Warenlager oder von mehreren Systemen in unterschiedlichen Warenlagern stammen. Somit kann ein selbstlernendes System zur Überwachung und Steuerung eines Warenflusses in einem Warenlager realisiert werden. Als selbstlernendes System ist hierbei ein System anzusehen, welches einerseits aus systemeigenen Bildern und erfassten Daten und/oder aus Bildern gleichartiger Systeme, welche über ein Datencenter mit dem System vernetzt sind, lernt.

Bevorzugt ist vorgesehen, dass bei einer Abweichung der ermittelten Warenanzahl vom Sollwert eine Eingabeaufforderung an einen Benutzer gerichtet wird und eine vom Benutzer manuell gezählte Warenanzahl erfasst und in die Datenverarbeitungseinheit eingespeist wird, wonach die ermittelte Warenanzahl von der Datenverarbeitungseinheit mit der manuell gezählten Warenanzahl verglichen und der Algorithmus zur Objekterkennung anhand des Vergleichs adaptiert wird. Die Abweichung vom Sollwert kann einerseits auf einen vom System unabhängigen Fehler, beispielsweise eine Fehlbeladung des Ladungsträgers, und andererseits auf eine Fehlerkennung durch die Datenverarbeitungseinheit hindeuten. Somit kann durch einen Vergleich der ermittelten Warenanzahl mit der manuell gezählten Warenanzahl eine Feedbackeinrichtung realisiert werden, um den Algorithmus zur Objekterkennung zu verbessern. Hierbei kann einerseits festgestellt werden, dass die ermittelte Warenanzahl korrekt und die Abweichung vom Sollwert infolge einer Fehlbeladung des Ladungsträgers aufgetreten ist. Andererseits kann festgestellt werden, dass die Warenanzahl falsch ermittelt wurde, wodurch die Abweichung vom Sollwert aufgetreten ist. Um die manuell gezählte Warenanzahl zu ermitteln, wird die Anzahl der Waren im Ablagebereich des Ladungsträgers vom Benutzer gezählt.

Zum besseren Verständnis der Erfindung wird diese anhand der nachfolgenden Figuren näher erläutert.

Es zeigen jeweils in stark vereinfachter, schematischer Darstellung:
- Fig. 1: ein System zur Erfassung einer Warenanzahl in einem Ablagebereich eines Ladungsträgers in einem Warenlager;
- Fig. 2: eine Draufsicht auf einen erfassten Ladungsträger;
- Fig. 3: eine alternative Ausführung des Systems zur Erfassung der Warenanzahl;
- Fig. 4: ein Blockdiagramm des Systems zur Erfassung der Warenanzahl;
- Fig. 5: ein Netzwerk aus einer Vielzahl von Systemen zur Erfassung der Warenanzahl und einem Datencenter;
- Fig. 6: ein Flussdiagramm für ein Verfahren zur Erfassung der Warenanzahl am Wareneingang;
- Fig. 7: ein Flussdiagramm für ein Verfahren zur Erfassung der Warenanzahl am Warenausgang;
- Fig. 8: ein Flussdiagramm für ein Verfahren zur Erfassung der Warenanzahl bei einer automatischen Inventur.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z. B. oben, unten, seitlich usw. auf die unmittelbar beschriebene sowie dargestellte Figur bezogen und bei einer Lageänderung sinngemäß auf die neue Lage zu übertragen.

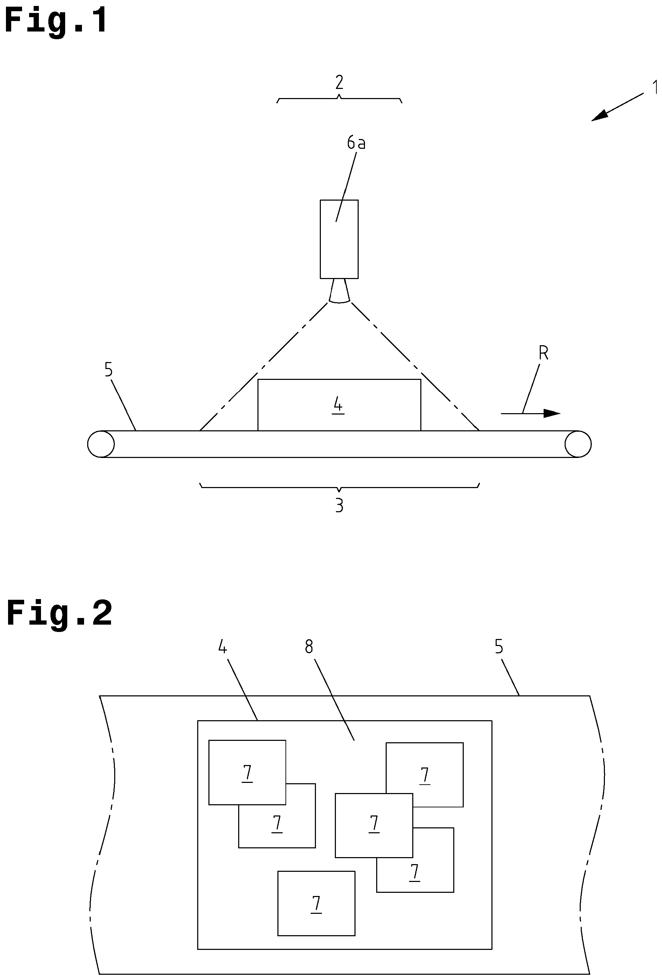

Fig. 1 zeigt ein System 1 zur Erfassung einer Warenanzahl. Das System 1 umfasst ein Bilderfassungssystem 2 sowie einen Analysebereich 3, in welchem ein Ladungsträger 4 bereitgestellt werden kann, wie dies in Fig. 1 gezeigt ist. Der Analysebereich 3 ist im Wesentlichen jener Bereich, welcher für das Bilderfassungssystem 2 einsehbar bzw. von diesem abbildbar ist.

Ein Bereitstellen des Ladungsträgers 4 kann manuell, durch einen Handling-Roboter oder, wie in Fig. 1 dargestellt, durch eine automatisiert betriebene Fördervorrichtung 5 erfolgen. Im gezeigten Beispiel wird der Ladungsträger 4 von der Fördervorrichtung 5 in einer Förderrichtung R transportiert und dabei durch den Analysebereich 3 bewegt.

Nach gezeigter Ausführung ist der Ladungsträger 4 durch einen Behälter, einen Karton oder ein Tablar gebildet. Dabei kann ein in Fig. 1 nicht ersichtlicher Ablagebereich 8 einem Innenvolumen des Behälters, Kartons oder Tablars entsprechen. Der Ablagebereich 8 ist von oben bzw. aus einer Vogelperspektive einsehbar. Ein solcher Ladungsträger 4 umfasst einen Ablageboden, an diesem aufragende Seitenwände und zumindest eine durch die Seitenwände begrenzte Beladeöffnung auf. Sind die Seitenwände eher niedrig ausgebildet, kann man auch von einem Seitenrand sprechen, wie dies bei einem Tablar der Fall wäre.

Der Ladungsträger 4 kann durch eine automatisierte Fördervorrichtung 5 transportiert werden, wozu dieser eine Transportfläche ausbildet. Die Transportfläche ist an einer vom Ablagebereich 8 abgewandten Unterseite des Ablagebodens ausgebildet. Die Ablagefläche ist an einer dem Ablagebereich zugewandten Oberseite des Ablagebodens ausgebildet.

Vorzugsweise ist die Fördervorrichtung 5 so ausgebildet, dass diese imstande ist, im Analysebereich 3 einen konstanten senkrechten Abstand zwischen dem Bilderfassungssystem 2 und dem Ladungsträger 4 zu gewährleisten, während dieser durch den Analysebereich 3 transportiert wird.

In Fig. 1 ist die Fördervorrichtung 5 als stationäre Fördervorrichtung 5 ausgebildet, beispielsweise durch eine Gurtfördervorrichtung oder Rollenfördervorrichtung. Alternativ kann die Fördervorrichtung 5 als mobile Fördervorrichtung 5 ausgebildet sein, beispielsweise umfassend ein oder mehrere, vorzugsweise fahrerlose, Transportfahrzeuge.

Das in Fig. 1 gezeigte Bilderfassungssystem 2 weist eine erste Kamera 6a auf, welche zur Aufnahme eines Bildes des Ablagebereiches 8 des Ladungsträgers 4 aus der Vogelperspektive angeordnet ist. Hierfür ist eine optische Achse der ersten Kamera 6a im Wesentlichen orthogonal zu einer Ablagefläche des Ablagebodens bzw. im Wesentlichen orthogonal zu einer Förderebene der Fördervorrichtung 5 ausgerichtet, auf welcher der Ladungsträger 4 transportiert wird. Vorzugsweise liegt eine Ablagefläche des Ladungsträgers 4 in oder parallel zur Förderebene.

Fig. 2 zeigt den Ladungsträger 4 aus der Vogelperspektive. In dieser Darstellung sind die Waren 7 ersichtlich, welche im Ablagebereich 8 des Ladungsträgers 4 angeordnet sind. Die Waren 7 liegen im Wesentlichen ungeordnet im Aufnahmebereich, sodass es gegebenenfalls zu einer Überlappung der Waren 7 kommt. Im gezeigten Beispiel sind die Waren 7 schematisch als Rechtecke dargestellt. Selbstverständlich können die Waren 7 in der Realität eine beliebige Form aufweisen. Ferner ist es möglich, dass der Ladungsträger 4 sortenrein oder gemischt mit Waren 7 beladen ist.

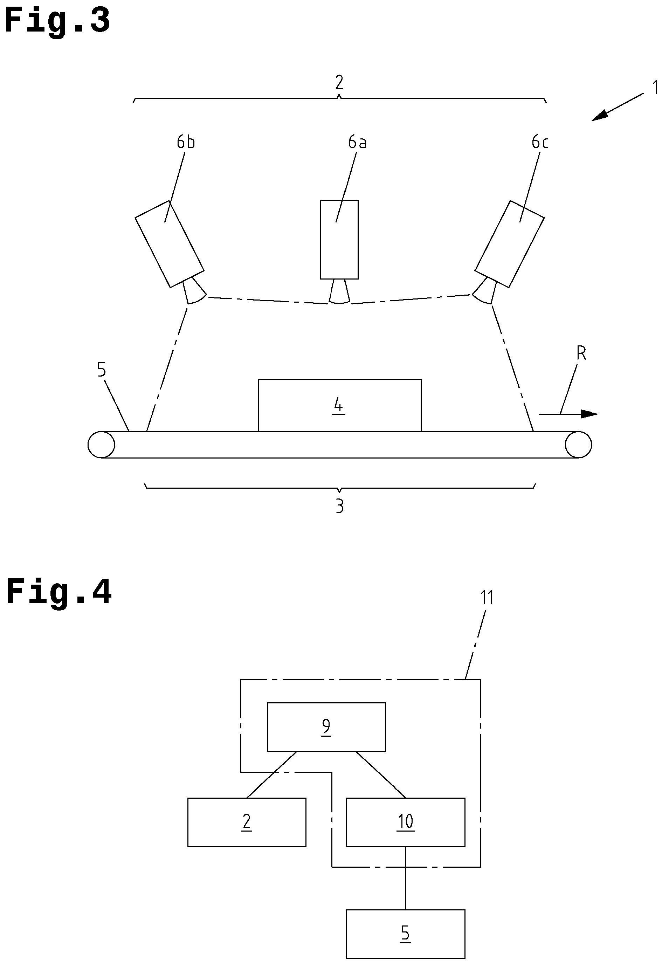

In Fig. 3 ist eine alternative Ausführung des Systems 1 aus Fig. 1 dargestellt. Im Wesentlichen ist das System 1 wie im zuvor gezeigten Ausführungsbeispiel ausgebildet. Auch hierbei kann im Wesentlichen eine beliebige Fördervorrichtung 5 vorgesehen sein. Ferner weist das Bilderfassungssystem 2 zusätzlich zur ersten Kamera 6a eine zweite Kamera 6b sowie eine dritte Kamera 6c auf. Die zweite Kamera 6b und die dritte Kamera 6c sind zur Aufnahme eines Bildes des Ablagebereiches 8 des Ladungsträgers 4 aus einer zweiten Perspektive und einer dritten Perspektive angeordnet. Hierfür schließen die optische Achse der ersten Kamera 6a und/oder die optische Achse der zweiten Kamera 6b jeweils mit der Ablagefläche des Ablagebereiches 8 einen Winkel ein, welcher von 90° verschieden ist.

Fig. 4 zeigt eine schematische Darstellung des Systems 1 zur Erfassung der Warenanzahl.

Das Bilderfassungssystem 2 ist mit einer Datenverarbeitungseinheit 9 verbunden, sodass von dem Bilderfassungssystem 2 erfasste Bilder an diese übertragen werden können. Hierfür können das Bilderfassungssystem 2 sowie die Datenverarbeitungseinheit 9 jeweils eine Kommunikationsschnittstelle, beispielsweise einen USB-Port oder dergleichen, aufweisen, sodass eine Kommunikationsverbindung zwischen dem Bilderfassungssystem 2 und der Datenverarbeitungseinheit 9 mittels eines Datenkabels realisiert sein kann. Alternativ dazu kann die Kommunikationsschnittstelle eine Sende- und Empfangseinrichtung umfassen, sodass die Kommunikationsverbindung über ein drahtloses Netzwerk, insbesondere ein lokales Funknetz (Wireless Local Area Network "WLAN"), oder auf einem Bluetooth-Standard basierend, realisiert ist.

Darüber hinaus ist die Datenverarbeitungseinheit 9 dazu eingerichtet, Bilder von dem Bilderfassungssystem 2 zu empfangen und mittels eines Algorithmus zur Objekterkennung auszuwerten, um eine Warenanzahl im Ablagebereich 8 zu ermitteln. Ferner ist die Datenverarbeitungseinheit 9 dazu eingerichtet, die ermittelte Warenanzahl zu speichern und/oder eine Transportvorgabe für den Ladungsträger 4 zu erstellen, welche auf der ermittelten Warenanzahl basiert.

Überdies ist die Datenverarbeitungseinheit 9 mit einer elektronischen Steuereinheit 10 verbunden, sodass die Transportvorgabe an die Steuereinheit 10 übertragen werden kann. Hierfür können die Steuereinheit 10 sowie die Datenverarbeitungseinheit 9 jeweils eine Kommunikationsschnittstelle aufweisen, welche beispielsweise einen USB-Port oder dergleichen und/oder eine Sende- und Empfangseinrichtung umfasst, sodass eine Kommunikationsverbindung zwischen der Datenverarbeitungseinheit 9 und der Steuereinheit 10 ebenfalls mittels eines Datenkabels oder einem drahtlosen Netzwerk, insbesondere ein lokales Funknetz (Wireless Local Area Network "WLAN"), oder auf einem Bluetooth-Standard basierend, realisiert sein kann. Alternativ können die Datenverarbeitungseinheit 9 und die Steuereinheit 10 zwei Untereinheiten einer Kontrolleinheit 11 des Systems 1 sein. Eine derartige Kontrolleinheit 11 ist in Fig. 4 als strichpunktiertes Kästchen angedeutet.

Mit Vorteil steht die Steuereinheit 10 in Kommunikationsverbindung, beispielsweise drahtlos oder mittels eines Kabels, mit der Fördervorrichtung 5, sodass die Fördervorrichtung 5 angesteuert und ein Transport des Ladungsträgers 4 gemäß der Transportvorgabe veranlasst werden kann.

Die Transportvorgabe umfasst vorzugsweise einen Zielort, beispielsweise einen bestimmten Arbeitsplatz oder Lagerplatz, einen Transportweg, beispielsweise entlang einer Hauptstrecke oder entlang einer Nebenstrecke der Fördervorrichtung 5, und/oder eine Weichenstellung der Fördervorrichtung 5 oder dergleichen.

Um zusätzliche Warendaten zu erfassen, kann das System 1 weitere, in Fig. 1 bis Fig. 4 nicht dargestellte, Erfassungsvorrichtungen aufweisen, welche mit der Datenverarbeitungseinheit 9 verbunden sind, sodass erfasste Daten an diese übertragen werden können. Beispielsweise kann eine Wiegevorrichtung vorgesehen sein, welche vorzugsweise in die Fördervorrichtung 5 integriert ist. Die Wiegevorrichtung kann dazu ausgebildet sein, ein Gesamtgewicht des Ladungsträgers 4 zu erfassen und dieses an die Datenverarbeitungseinheit 9 zu übermitteln.

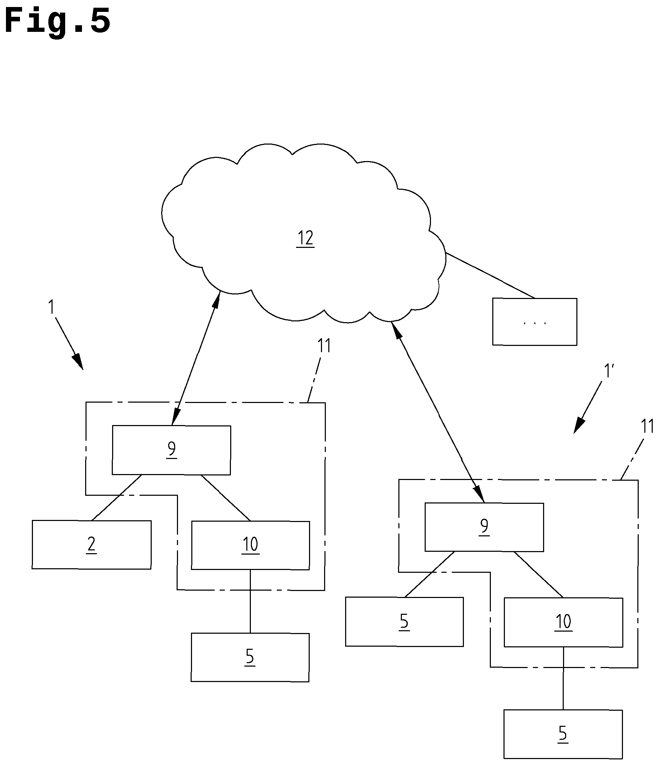

Fig. 5 zeigt eine schematische Darstellung eines Netzwerks mit einer Vielzahl von vorangehend beschriebener Systeme 1, welche über ein Datencenter 12 vernetzt bzw. verbunden sind. Das Netzwerk kann im Wesentlichen beliebig viele Systeme 1 umfassen.

Im dargestellten Beispiel sind zumindest ein erstes System 1 sowie ein weiteres System 1' mit dem Datencenter 12 verbunden. Durch ein Kästchen mit drei Punkten sind in Fig. 5 optionale weitere Systeme 1' angedeutet, welche ebenfalls mit dem Datencenter 12 verbunden sein können.

Hierbei sind die Systeme 1, 1' jeweils über eine (durch einen Doppelpfeil angedeutete) bidirektionale Kommunikationsverbindung mit dem Datencenter 12 verbunden. Dadurch ist einerseits ein Datentransfer vom System 1,1' zum Datencenter 12 und andererseits ein Datentransfer vom Datencenter 12 zum System 1,1' möglich. Hierfür können die Systeme 1, 1' jeweils ein erstes Kommunikationsmodul und das Datencenter 12 ein zweites Kommunikationsmodul aufweisen. Die Kommunikationsmodule können jeweils eine Sende- und Empfangseinrichtung, einen Anschluss für eine Kabelverbindung, beispielsweise einen USB-Port, einen Ethernet-Port, oder dergleichen aufweisen.

Die Kommunikationsverbindung zwischen dem Datencenter 12 und den Systemen 1, 1' kann vorzugsweise durch ein Datennetzwerk, insbesondere eine Internetverbindung, oder drahtlos, insbesondere über den Bluetooth-Standard oder über ein lokales Funknetz (Wireless Local Area Network "WLAN"), hergestellt werden. Das Datencenter 12 kann darüber hinaus als Plattform ausgebildet sein, welche auf einem Server eingerichtet ist. Der Server kann beispielsweise über eine Internetverbindung mit den einzelnen Systemen 1, 1' verbunden sein.

Bei einem Verfahren zur Erfassung der Warenanzahl im Ablagebereich 8 des Ladungsträgers 4 wird der Ladungsträger 4 im Analysebereich 3 bereitgestellt und mit dem Bilderfassungssystem 2 zumindest ein Bild des Ablagebereiches 8 des Ladungsträgers 4 aufgenommen. Die Bereitstellung des Ladungsträgers 4 im Analysebereich 3 kann eine kontinuierliche Transportbewegung des Ladungsträgers 4 durch den Analysebereich 3 oder das Anhalten des Ladungsträgers 4 im Analysebereich 3 umfassen.

Das aufgenommene Bild wird an die Datenverarbeitungseinheit 9 übermittelt, wonach das Bild mittels eines Algorithmus zur Objekterkennung ausgewertet wird, um die Warenanzahl zu bestimmen. Ferner wird eine Transportvorgabe für den Ladungsträger 4 erstellt. Überdies kann die Warenanzahl abgespeichert werden.

In einem nächsten Schritt wird die Transportvorgabe an die Steuereinheit 10 übermittelt, welche die Fördervorrichtung 5 so ansteuert, dass der Ladungsträger 4 gemäß der Transportvorgabe an einen bestimmten Zielort transportiert wird. Der Zielort kann ein Lagerbereich, ein Lagerplatz im Warenlager (insbesondere im Lagerbereich des Warenlagers), ein Arbeitsplatz, wie etwa eine Kommissionierstation, eine Verpack- und/oder Versandstation, ein Korrekturarbeitsplatz, oder dergleichen sein.

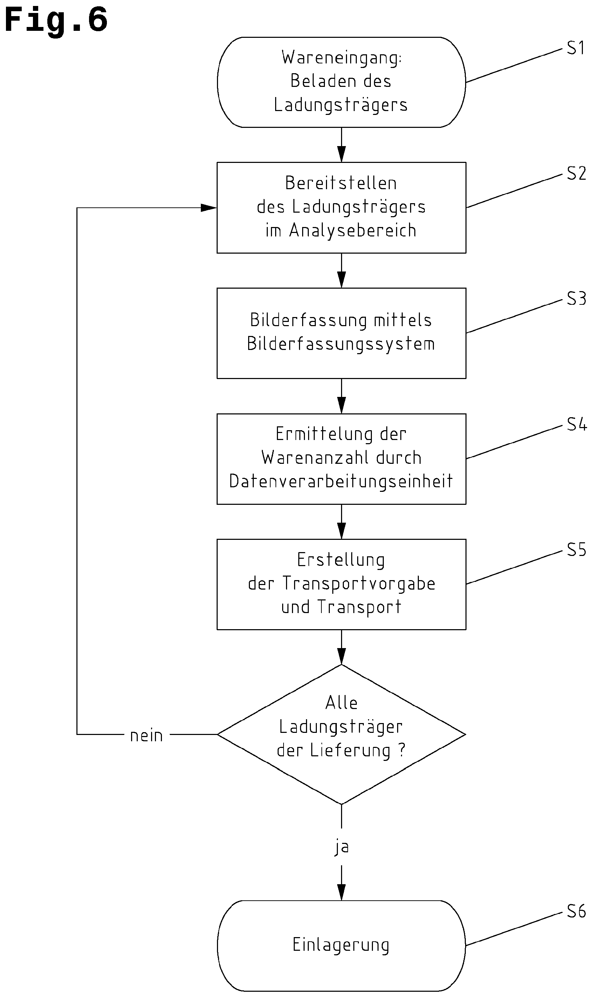

Fig. 6 zeigt eine schematische Darstellung eines Verfahrens zur Erfassung der Warenanzahl am Wareneingang. Hierfür kann das zuvor beschriebene System 1 zwischen einem Anlieferbereich am Wareneingang und dem Lagerbereich des Warenlagers angeordnet sein. Der Anlieferbereich umfasst eine oder mehrere Arbeitsplätze. Der Arbeitsplatz kann durch eine Umladestation gebildet sein, wo Waren in einen Quell-Ladungsträger umgeladen werden, wie nachfolgend beschrieben.

In einem ersten Schritt S1 können im Wareneingang angelieferte Waren 7 in einen oder mehrere Ladungsträger 4, vorzugsweise Quell-Ladungsträger, wie Quellbehälter, umgeladen werden. Üblicherweise werden Waren auf Anlieferpaletten und sortenrein bereitgestellt. Hierbei werden die Waren 7 der Lieferung so auf einen oder mehrere Ladungsträger 4 verteilt, dass diese einlagig oder maximal zweilagig im Ladungsträger 4 angeordnet sind. Durch diesen optionalen Schritt kann die Ermittlung der Warenanzahl vereinfacht werden, da gegebenenfalls ein Bild aus einer einzigen Perspektive, vorzugsweise der Vogelperspektive, ausreicht um sämtliche Waren 7 im Ablagebereich 8 abzubilden. Ferner kann ein Auswertungsergebnis der Objekterkennung verbessert werden.

In einem zweiten Schritt S2 wird der Ladungsträger 4 oder einer der Ladungsträger 4 im Analysebereich 3 des Systems 1 bereitgestellt. Vorzugsweise erfolgt dies manuell, mittels eines Handling-Roboters oder der Fördervorrichtung 5.

Darüber hinaus wird in einem dritten Schritt S3 zumindest ein Bild des Ablagebereiches 8 des Ladungsträgers 4 aufgenommen. Hierbei wird mit der ersten Kamera 6a des Bilderfassungssystems 2 ein Bild aus einer ersten Perspektive, insbesondere von oben bzw. aus einer Vogelperspektive, aufgenommen. Falls eine zweite Kamera 6b und/oder eine dritte Kamera 6c vorhanden sind, können mit der zweiten Kamera 6b und/oder der dritten Kamera 6c jeweils ein oder mehrere weitere Bilder, insbesondere aus einer oder mehreren weiteren Perspektiven aufgenommen werden.

Das aufgenommene Bild wird vom Bilderfassungssystem 2 an die Datenverarbeitungseinheit 9 übermittelt. Um die zum jeweiligen Ladungsträger 4 korrespondierende Warenanzahl zu ermitteln, wird das aufgenommene Bild in einem vierten Schritt S4 mittels eines Algorithmus zur Objekterkennung ausgewertet. Hierbei werden die einzelnen im Ablagebereich 8 des Ladungsträgers 4 angeordneten Waren 7 von der Datenverarbeitungseinheit 9 als Objekte erkannt und die ermittelte Warenanzahl gespeichert. Dieser Schritt kann für sämtliche zu einem Ladungsträger 4 korrespondierenden Bilder durchgeführt werden, falls mehrere Bilder, insbesondere durch mehrere Kameras, aufgenommen wurden.

In einem fünften Schritt S5 wird von der Datenverarbeitungseinheit 9 auf Basis der Warenanzahl eine Transportvorgabe generiert, gemäß welcher der Ladungsträger 4 zu einem Arbeitsplatz oder zu einem Lagerplatz im Lagerbereich transportiert wird.

Die Schritte zwei bis fünf können für sämtliche zu einer Lieferung korrespondierenden Ladungsträger 4 wiederholt werden, sodass zu jedem der Ladungsträger 4 eine korrespondierende Warenanzahl ermittelt wird. Ferner können die entsprechenden Warenanzahlen zu einer Gesamtwarenanzahl addiert und mit einer Liefermenge verglichen werden. Dies erfolgt beispielsweise mittels der Datenverarbeitungseinheit 9. Somit kann bei der Anlieferung exakt überprüft werden, ob eine korrekte Anzahl der Waren 7 geliefert wurde.

In einem sechsten Schritt S6 kann der Ladungsträger 4 eingelagert werden. Falls die Waren 7 im ersten Schritt S1 auf mehrere Ladungsträger 4 aufgeteilt wurden, können diese zunächst in einem Ladungsträger 4 zusammengeführt werden, um einen für die Waren 7 erforderlichen Lagerplatz zu reduzieren, wonach dieser Ladungsträger 4 eingelagert wird.

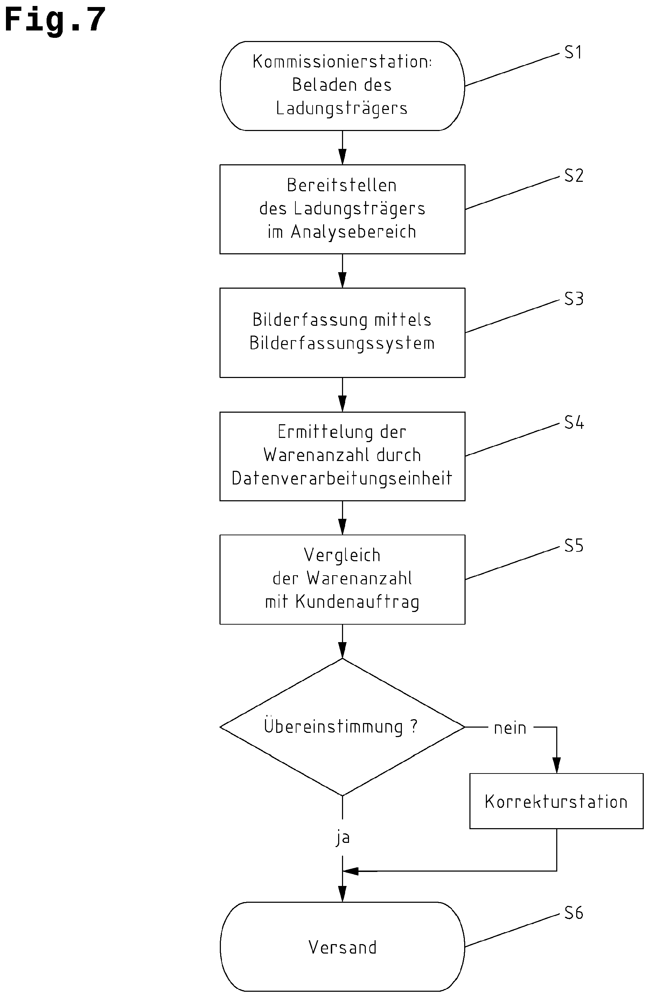

In Fig. 7 ist ein Verfahren zur Erfassung der Warenanzahl am Warenausgang schematisch dargestellt. Hierfür kann das zuvor beschriebene System 1 zwischen einem Kommissionierbereich und einem Warenauslieferbereich am Warenausgang angeordnet sein. Der Kommissionierbereich umfasst eine oder mehrere Arbeitsplätze. Der Arbeitsplatz kann durch eine Kommissionierstation gebildet sein, wo Waren von einem Quell-Ladungsträger entnommen und in einen Ziel-Ladungsträger gemäß einem Auftrag kommissioniert werden.

Der Ladungsträger 4, insbesondere ein Ziel-Ladungsträger, wird im ersten Schritt S1 an einer Kommissionierstation gemäß einem Auftrag beladen und anschließend von der Kommissionierstation zum Analysebereich 3 transportiert. In den Schritten zwei bis vier S2, S3, S4 wird, wie zuvor beschrieben, die zum Ladungsträger 4 korrespondierende Warenanzahl ermittelt.

Im fünften Schritt S5 wird die ermittelte Warenanzahl mit einem korrespondierenden Kundenauftrag verglichen, eine entsprechende Transportvorgabe erstellt und der Ladungsträger 4 gemäß der Transportvorgabe zum entsprechenden Zielort transportiert.

Stimmt die ermittelte Warenanzahl mit dem Auftrag überein, so kann der Ladungsträger 4 beispielsweise zu einem Versandarbeitsplatz transportiert werden. Weicht die ermittelte Warenanzahl hingegen vom Auftrag ab, so deutet dies auf einen Kommissionierfehler hin. Der Ladungsträger 4 kann dann beispielsweise zu einem Korrekturarbeitsplatz transportiert werden.

Der Arbeitsplatz kann aber auch durch einen Packplatz gebildet sein, wo Waren in einen Ziel-Ladungsträger gemäß einem Auftrag gepackt werden, wobei der Ziel-Ladungsträger in diesem Fall einem Versandladehilfsmittel, beispielweise einem Versandkarton, entspricht. Am Packplatz kann eine Endkontrolle erfolgen. Stimmt die ermittelte Warenanzahl mit dem Auftrag überein, so kann das Versandladehilfsmittel verschlossen und abgesandt werden. Weicht die ermittelte Warenanzahl hingegen vom Auftrag ab, so deutet dies auf einen Kommissionierfehler hin. Das Versandladehilfsmittel kann dann beispielsweise zu einem Korrekturarbeitsplatz transportiert werden.

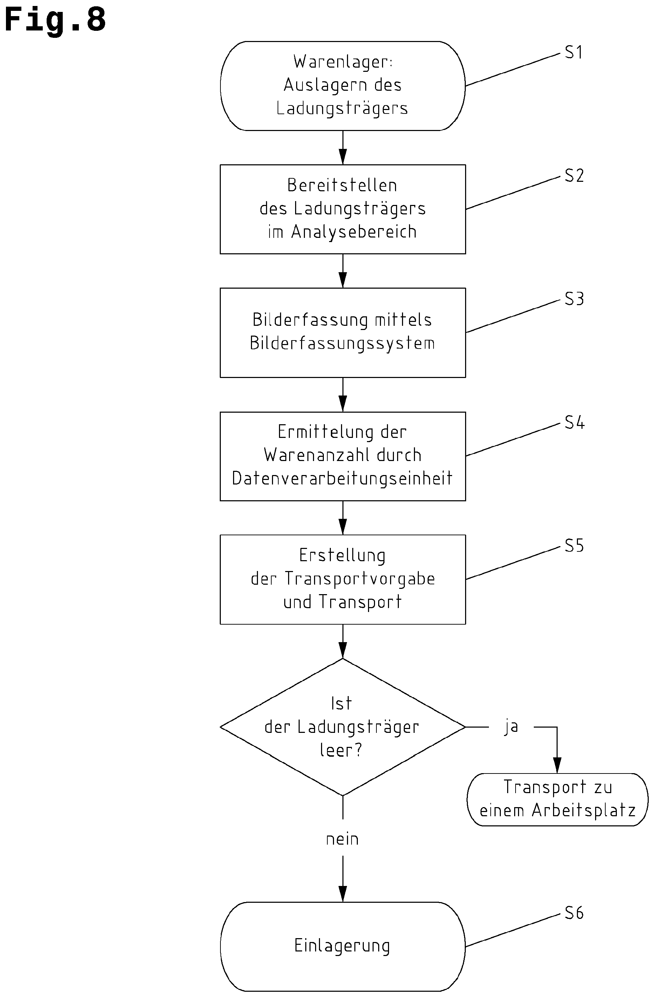

In Fig. 8 ist ein Verfahren zur Erfassung der Warenanzahl schematisch dargestellt, mit welchem eine automatische Inventur realisiert werden kann.

Bei der automatischen Inventur wird im ersten Schritt S1 ein Ladungsträger 4 im Warenlager ausgelagert und im Analysebereich 3 des Systems 1 zur Erfassung einer Warenanzahl im Ladungsträger 4 bereitgestellt. Dies erfolgt vorzugsweise mittels einer automatisierten Fördervorrichtung 5.

In den Schritten zwei bis vier S2, S3, S4 wird, wie zuvor beschrieben, die zum Ladungsträger 4 korrespondierende Warenanzahl ermittelt und gespeichert.

Im fünften Schritt S5 wird von der Datenverarbeitungseinheit 9 eine Transportvorgabe erstellt, welche auf der ermittelten Warenanzahl basiert. So kann ein befüllter Ladungsträger 4 durch die Fördervorrichtung 5 wieder zurück in den Lagerbereich transportiert werden. Ein leerer Ladungsträger 4 kann hingegen zu einem Arbeitsplatz transportiert und beispielweise am Wareneingang neu befüllt werden.

Die Schritte eins bis fünf können bei der automatischen Inventur selbstverständlich für eine Vielzahl der Ladungsträger 4, insbesondere sämtliche Ladungsträger 4, des Warenlagers sequenziell durchgeführt werden.

Darüber hinaus kann bei derartigen Verfahren zur Erfassung der Warenanzahl jeweils ein, in Fig. 6 bis Fig. 8 nicht gezeigter, Lernprozess, umfassend einen Teaching-Schritt und einen Testlauf, vorgesehen sein, welcher insbesondere vor einer ersten Inbetriebnahme des Systems 1, 1' durchgeführt wird.

Im Teaching-Schritt wird ein in der Datenverarbeitungseinheit 9 implementierter Algorithmus bzw. ein in der Datenverarbeitungseinheit 9 vorhandenes künstliches neuronales Netzwerk oder dergleichen anhand von einer Vielzahl vorhandener Bilder von Ablagebereichen 8 mit jeweils einer bekannten korrespondierenden Warenanzahl trainiert. Hierbei werden die Bilder sowie die korrespondierenden Warenanzahlen in die Datenverarbeitungseinheit 9 eingespeist. Dies kann insbesondere anhand von zumindest 100 Bildern, vorzugsweise etwa 200 Bilder, durchgeführt werden.

Nach dem Teaching-Schritt wird ein Testlauf durchgeführt. Hierbei werden eine Vielzahl von Bildern mit bekannter Warenanzahl in die Datenverarbeitungseinheit 9 eingespeist. Die Datenverarbeitungseinheit 9 wertet die Bilder mittels Objekterkennung aus, um zu den Bildern jeweils eine korrespondierende Warenanzahl zu ermitteln. Darüber hinaus wird von der Datenverarbeitungseinheit 9 ausgegeben, welche Bilder schlecht bzw. mit geringer Konfidenz und welche Bilder gut bzw. mit hoher Konfidenz ausgewertet werden konnten. Die ermittelte Warenanzahl von Bildern, welche mit geringer Konfidenz ausgewertet wurden, können mit der korrespondierenden bekannten Warenanzahl verglichen werden, um zu bestimmen, ob eine korrekte Warenanzahl ermittelt wurde. Ferner kann die für die Bilder jeweils ermittelte Warenanzahl mit der korrespondierenden bekannten Warenanzahl verglichen werden, um eine Trefferrate zu bestimmen. Die Trefferrate gibt hierbei einen Anteil der Bilder an, für welche die ermittelte Warenanzahl mit der bekannten Warenanzahl übereinstimmt. Liegt die Trefferrate unter einem vorgegebenen Wert, beispielsweise unter 80%, so kann der Teaching-Schritt mit weiteren Bildern bzw. Ladungsträgern 4 sowie der Testlauf wiederholt werden, bis die Trefferrate zumindest den vorgegebenen Wert erreicht.

Mit dem beschriebenen System 1, 1' sowie Verfahren kann somit eine automatisierte Erfassung der Warenanzahl am Wareneingang und/oder am Warenausgang eines Warenlagers sowie eine automatisierte Inventur in einem Warenlager realisiert werden, wodurch ein wesentlicher Baustein eines vollautomatischen Warenlagers verwirklicht werden kann.

Abschließend wird auch festgehalten, dass der Schutzbereich durch die Patentansprüche bestimmt ist. Die Beschreibung und die Zeichnungen sind jedoch zur Auslegung der Patentansprüche heranzuziehen.

Insbesondere wird auch festgehalten, dass das dargestellte System in der Realität auch mehr oder auch weniger Bestandteile als dargestellt umfassen können. Teilweise können die dargestellten Systeme beziehungsweise deren Bestandteile auch unmaßstäblich und/oder vergrößert und/oder verkleinert dargestellt sein.

### Bezugszeichenaufstellung

- 1, 1': System
- 2: Bilderfassungssystem
- 3: Analysebereich
- 4: Ladungsträger
- 5: Fördervorrichtung
- 6a, 6b, 6c: Kamera
- 7: Ware
- 8: Ablagebereich
- 9: Datenverarbeitungseinheit
- 10: Steuereinheit
- 11: Kontrolleinheit
- 12: Datencenter
- R: Förderrichtung
- S1: erster Schritt
- S2: zweiter Schritt
- S3: dritter Schritt
- S4: vierter Schritt
- S5: fünfter Schritt
- S6: sechste Schritt

## Patentansprüche

1. System (1) zur Erfassung einer Warenanzahl in einem Ablagebereich (8) eines Ladungsträgers (4) in einem Warenlager, umfassend
einen Analysebereich (3), in welchem der Ladungsträger (4) bereitgestellt werden kann,
ein Bilderfassungssystem (2) zur Überwachung des Analysebereiches (3),
eine Datenverarbeitungseinheit (9), und
eine Steuereinheit (10),
wobei das Bilderfassungssystem (2) dazu eingerichtet ist, ein Bild des Ablagebereiches (8) des Ladungsträgers (4) aufzunehmen und an die Datenverarbeitungseinheit (9) zu übermitteln,
wobei die Datenverarbeitungseinheit (9) dazu eingerichtet ist, ein von dem Bilderfassungssystem (2) übermitteltes Bild mittels eines Algorithmus zur Objekterkennung auszuwerten, um die im Ablagebereich (8) des Ladungsträgers (4) angeordneten Waren (7) als Objekte zu erkennen und die Warenanzahl im Ablagebereich (8) des Ladungsträgers (4) zu ermitteln, wobei der Algorithmus zur Objekterkennung in der Datenverarbeitungseinheit (9) mittels maschinellem Lernen implementiert ist, wobei für das maschinelle Lernen eine Vielzahl von Bildern von jeweils einem Ablagebereich (8) eines Ladungsträgers (4) mit jeweils unterschiedlicher Warenanzahl in die Datenverarbeitungseinheit (9) eingespeist wird oder wurde und die einzelnen Bilder jeweils mit der zum jeweiligen Bild korrespondierenden Warenanzahl verknüpft sind, und
wobei die Datenverarbeitungseinheit (9) auf Basis der Warenanzahl eine Transportvorgabe für den Ladungsträger (4) erstellt und an die Steuereinheit (10) übermittelt, wobei die Steuereinheit (10) dazu eingerichtet ist, eine Fördervorrichtung (5) des Warenlagers anzusteuern, sodass die Fördervorrichtung (5) den Ladungsträger (4) gemäß der Transportvorgabe fördert, wobei die Fördervorrichtung (5) als Gurtförderer oder als Rollenförderer ausgebildet ist oder fahrerlose Transportfahrzeuge umfasst.

2. System (1) nach Anspruch 1, **dadurch gekennzeichnet, dass** die Datenverarbeitungseinheit (9) dazu eingerichtet ist, Warendaten mittels Objekterkennung zu erfassen und/oder Warendaten zu empfangen.

3. System (1) nach Anspruch 1 oder 2, **dadurch gekennzeichnet, dass** das Bilderfassungssystem (2) eine erste Kamera (6a) aufweist, welche zur Aufnahme des Bildes aus einem ersten Winkel, insbesondere 90° zu einer Ablagefläche des Ladungsträgers (4), angeordnet ist.

4. System (1) nach Anspruch 3, **dadurch gekennzeichnet, dass** das Bilderfassungssystem (2) zumindest eine weitere Kamera (6b, 6c) aufweist, welche zur Aufnahme zumindest eines weiteren Bildes des Ablagebereiches (8) aus einem weiteren Winkel angeordnet ist, wobei der weitere Winkel vom ersten Winkel verschieden ist.

5. System (1) nach einem der Ansprüche 1 bis 4, **dadurch gekennzeichnet, dass** das System (1) zumindest eine Erfassungseinheit zur Erfassung von zumindest einem Ladungsträgerparameter, vorzugsweise einem Gesamtgewicht des Ladungsträgers (4), aufweist, wobei die Erfassungseinheit den zumindest einen Ladungsträgerparameter an die Datenverarbeitungseinheit (9) übermittelt und die Datenverarbeitungseinheit (9) vorzugsweise dazu eingerichtet ist, den Ladungsträgerparameter bei einer Auswertung des Bildes zu berücksichtigen.

6. System (1) nach einem der Ansprüche 1 bis 5, **dadurch gekennzeichnet, dass** die Datenverarbeitungseinheit (9) über ein Kommunikationsmodul mit einem Datencenter (12) verbunden ist.

7. System (1) nach Anspruch 6, **dadurch gekennzeichnet, dass** die Datenverarbeitungseinheit (9) dazu ausgebildet ist, einen Datensatz, vorzugsweise umfassend ein Bild des Ablagebereiches (8) und/oder die ermittelte Warenanzahl, an das Datencenter (12) zu übermitteln und/oder von diesem zu empfangen, wobei die Datenverarbeitungseinheit (9) die Objekterkennung anhand von empfangenen Datensätzen optimiert.

8. Datencenter (12) zur Verwaltung von Datensätzen, die von einem System (1) nach Anspruch 7 hinterlegt werden, wobei die Datensätze jeweils zumindest ein Bild von einem Ablagebereich (8) eines Ladungsträgers (4) und eine ermittelte Warenanzahl umfassen, wobei die ermittelte Warenanzahl eine Anzahl von Waren im Ablagebereich angibt und das Datencenter (12) über ein Kommunikationsmodul mit einer Vielzahl von Systemen (1) nach Anspruch 7 zum Transfer von Datensätzen zwischen jeweils einem System (1) und dem Datencenter (12) verbunden ist.

9. Datencenter (12) nach Anspruch 8, **dadurch gekennzeichnet, dass** ein Algorithmus zum maschinellen Lernen im Datencenter implementiert ist, in welchen die Datensätze eingespeist werden können, um einen Algorithmus zur Objekterkennung zu verbessern.

10. Lagersystem, umfassend eine Vielzahl von Ladungsträgern (4) mit jeweils einem Ablagebereich (8), eine Fördervorrichtung (5) zum Transport der Ladungsträger (4) und ein System (1) zur Erfassung einer Warenanzahl im Ablagebereich (8) eines der Ladungsträger (4), **dadurch gekennzeichnet, dass** das System (1) nach einem der Ansprüche 1 bis 7 ausgebildet ist.

11. Verfahren zur Erfassung einer Warenanzahl in einem Ablagebereich (8) eines Ladungsträgers (4) in einem Warenlager,
wobei der Ladungsträger (4) in einem Analysebereich (3), insbesondere in einem Analysebereich (3) eines Systems (1) nach einem der Ansprüche 1 bis 7, bereitgestellt wird,
wobei mittels eines Bilderfassungssystems (2) ein Bild vom Ablagebereich (8) des Ladungsträgers (4) aufgenommen und an eine Datenverarbeitungseinheit (9) übermittelt wird,
wobei das Bild durch die Datenverarbeitungseinheit (9) mittels eines Algorithmus zur Objekterkennung ausgewertet wird, wobei Waren (7), welche im Ablagebereich (8) angeordnet sind, als Objekte erkannt werden, wobei die Warenanzahl ermittelt wird, wonach der Ladungsträger (4) aus dem Analysebereich (3) befördert wird, und wobei der Algorithmus zur Objekterkennung in der Datenverarbeitungseinheit (9) mittels maschinellem Lernen implementiert ist, wobei für das maschinelle Lernen eine Vielzahl von Bildern von jeweils einem Ablagebereich (8) eines Ladungsträgers (4) mit jeweils unterschiedlicher Warenanzahl in die Datenverarbeitungseinheit (9) eingespeist wird oder wurde und die einzelnen Bilder jeweils mit der zum jeweiligen Bild korrespondierenden Warenanzahl verknüpft sind, und
wobei die Datenverarbeitungseinheit (9) auf Basis der Warenanzahl eine Transportvorgabe für den Ladungsträger (4) erstellt und an eine Steuereinheit (10) des Systems (1) übermittelt, wobei die Steuereinheit (10) eine Fördervorrichtung (5) des Warenlagers ansteuert, sodass die Fördervorrichtung (5) den Ladungsträger (4) gemäß der Transportvorgabe fördert, wobei die Fördervorrichtung (5) als Gurtförderer oder als Rollenförderer ausgebildet ist oder fahrerlose Transportfahrzeuge umfasst.

12. Verfahren nach Anspruch 11, **dadurch gekennzeichnet, dass** der Ladungsträger (4) mit einer konstanten Geschwindigkeit durch den Analysebereich (3) bewegt wird, wobei das Bild aufgenommen wird.

13. Verfahren nach Anspruch 11 oder 12, **dadurch gekennzeichnet, dass** das Bild in Echtzeit ausgewertet und die Transportvorgabe in Echtzeit generiert werden.

14. Verfahren nach einem der Ansprüche 11 bis 13, **dadurch gekennzeichnet, dass** die Warenanzahl mit einem Sollwert verglichen wird, wobei der Ladungsträger (4) zu einem Arbeitsplatz transportiert wird, wenn der Sollwert unterschritten oder überschritten wird, oder zu einem Lagerplatz oder Warenausgang transportiert wird, wenn die Warenanzahl dem Sollwert entspricht.

15. Verfahren nach einem der Ansprüche 11 bis 14, **dadurch gekennzeichnet, dass** ein Gesamtgewicht des Ladungsträgers (4) mit einer Wiegevorrichtung erfasst und an die Datenverarbeitungseinheit (9) übermittelt wird, wonach die Warenanzahl im Ablagebereich (8) des Ladungsträgers (4) aus einem bekannten Einzelgewicht der Waren (7) und einem bekannten Leergewicht des Ladungsträgers (4) berechnet und bei der Erfassung der Warenanzahl berücksichtigt wird.

16. Verfahren nach einem der Ansprüche 11 bis 15, **dadurch gekennzeichnet, dass** der Algorithmus zur Objekterkennung mittels maschinellen Lernens in einem Teaching-Schritt anhand von vorhandenen Warendaten und/oder hinterlegten Bildern von Ablagebereichen (8) von Ladungsträgern (4) optimiert wird, indem eine Vielzahl von Bildern von Ablagebereichen (8) oder eine Vielzahl von Bildern von Ablagebereichen (8) und zu den Bildern korrespondierende Warenanzahlen in eine Recheneinheit eingespeist werden, auf welcher Recheneinheit der Algorithmus zur Objekterkennung implementiert ist, wonach ein Testlauf durchgeführt wird, bei welchem eine Vielzahl von Bildern von Ablagebereichen (8) in die Recheneinheit eingespeist werden und die korrespondierende Warenanzahl durch die Recheneinheit mittels des Algorithmus zur Objekterkennung ermittelt wird.

17. Verfahren nach einem der Ansprüche 11 bis 16, **dadurch gekennzeichnet, dass** die Objekterkennung der Datenverarbeitungseinheit (9) im laufenden Betrieb mittels maschinellen Lernens anhand von zentral gespeicherten Bildern und zu diesen korrespondierenden Warenanzahlen optimiert wird.

18. Verfahren nach einem der Ansprüche 14 bis 17, **dadurch gekennzeichnet, dass** bei einer Abweichung der ermittelten Warenanzahl vom Sollwert eine Eingabeaufforderung an einen Benutzer gerichtet wird und eine vom Benutzer manuell gezählte Warenanzahl erfasst und in die Datenverarbeitungseinheit (9) eingespeist wird, wonach die ermittelte Warenanzahl von der Datenverarbeitungseinheit mit der manuell gezählten Warenanzahl verglichen und der Algorithmus zur Objekterkennung anhand des Vergleichs adaptiert wird.

## Claims

1. A system (1) for detecting a number of articles in a placement region (8) of a load carrier (4) in an article storage, comprising
an analysis region (3), in which the load carrier (4) can be provisioned,
an image capturing system (2) for monitoring the analysis region (3),
a data processing unit (9), and
a control unit (10),
wherein the image capturing system (2) is configured to capture an image of the placement region (8) of the load carrier (4) and to transmit the image to the data processing unit (9),
wherein the data processing unit (9) is configured to evaluate an image transmitted by the image capturing system (2) using an algorithm for object recognition, in order to recognize the articles (7) arranged in the placement region (8) of the load carrier (4) as objects and to ascertain the number of articles in the placement region (8) of the load carrier (4), wherein the algorithm for object recognition is implemented in the data processing unit (9) using machine learning, wherein for machine learning a plurality of images in each case of one placement region (8) of a load carrier (4) each with a different number of articles is or was fed to the data processing unit (9), and the individual images are each linked to the number of articles corresponding to the respective image, and
wherein the data processing unit (9) generates a transport specification for the load carrier (4) based on the number of articles and transmits the transport specification to the control unit (10), wherein the control unit (10) is configured to control a conveying device (5) of the article storage, so that the conveying device (5) conveys the load carrier (4) according to the transport specification, wherein the conveying device (5) is configured as a belt conveyor or roller conveyor or comprises driverless transport vehicles.

2. The system (1) according to one of claim 1, **characterized in that** the data processing unit (9) is configured to detect article data using object recognition and/or to receive article data.

3. The system (1) according to claim 1 or 2, **characterized in that** the image capturing system (2) has a first camera (6a), which is arranged for capturing the image from a first angle, in particular 90° to a placement surface of the load carrier (4).

4. The system (1) according to claim 3, **characterized in that** the image capturing system (2) has at least one further camera (6b, 6c), which is arranged for capturing at least one further image of the placement region (8) from a further angle, wherein the further angle is different from the first angle.

5. The system (1) according to one of claims 1 to 4, **characterized in that** the system (1) has at least one detection unit for detecting at least one load carrier parameter, preferably a total weight of the load carrier (4), wherein the detection unit transmits the at least one load carrier parameter to the data processing unit (9), and the data processing unit (9) is preferably configured to take into account the load carrier parameter when evaluating the image.

6. The system (1) according to one of claims 1 to 5, **characterized in that** the data processing unit (9) is connected to a data center (12) via a communication module.

7. The system (1) according to claim 6, **characterized in that** the data processing unit (9) is configured to transmit a data set, preferably comprising an image of the placement region (8) and/or the ascertained number of articles, to the data center (12) and/or to receive a data set from the data center, wherein the data processing unit (9) optimizes the object recognition on the basis of received data sets.

8. A data center (12) for managing data sets, which are stored by a system (1) according to claim 7, wherein the data sets each comprise at least one image of a placement region (8) of a load carrier (4) and an ascertained number of articles, wherein the ascertained number of articles indicates a number of articles in the placement region, and the data center (12) is connected, via a communication module, to a plurality of systems (1) according to claim 7 for transmitting data sets between, in each case, one system (1) and the data center (12).

9. The data center (12) according to claim 8, **characterized in that** an algorithm for machine learning is implemented in the data center, wherein the data sets can be fed into the algorithm for machine learning in order to improve an algorithm for object recognition.

10. A warehouse system comprising a plurality of load carriers (4), each with a placement region (8), a conveying device (5) for transporting the load carriers (4), and a system (1) for detecting a number of articles in the placement region (8) of one of the load carriers (4), **characterized in that** the system (1) is formed according to one of claims 1 to 7.

11. A method for detecting a number of articles in a placement region (8) of a load carrier (4) in an article storage,
wherein the load carrier (4) is provisioned in an analysis region (3), in particular in an analysis region (3) of a system (1) according to one of claims 1 to 7,
wherein an image of the placement region (8) of the load carrier (4) is captured using an image capturing system (2) and is transmitted to a data processing unit (9),
wherein the image is evaluated by the data processing unit (9) using an algorithm for object recognition, wherein articles (7), which are arranged in the placement region (8), are recognized as objects, wherein the number of articles is ascertained, whereupon the load carrier (4) is conveyed away from the analysis region (3), and wherein the algorithm for object recognition is implemented in the data processing unit (9) using machine learning, wherein for machine learning a plurality of images in each case of one placement region (8) of a load carrier (4) each with a different number of articles is or was fed to the data processing unit (9), and the individual images are each linked to the number of articles corresponding to the respective image, and
wherein the data processing unit (9) generates a transport specification for the load carrier (4) based on the number of articles and transmits the specification to the control unit (10), wherein the control unit (10) is configured to control a conveying device (5) of the article storage, so that the conveying device (5) conveys the load carrier (4) according to the transport specification, wherein the conveying device (5) is configured as a belt conveyor or roller conveyor or comprises driverless transport vehicles.

12. The method according to claim 11, **characterized in that** the load carrier (4) is moved through the analysis region (3) at a constant speed, during which the image is captured.

13. The method according to claim 11 or 12, **characterized in that** the image is evaluated in real time, and the transport specification is generated in real time.

14. The method according to one of claims 11 to 13, **characterized in that** the number of articles is compared to a target value, wherein the load carrier (4) is transported to a working station when the target value is undershot or exceeded or is transported to a storage location or an article issue when the number of articles matches the target value.

15. The method according to one of claims 11 to 14, **characterized in that** a total weight of the load carrier (4) is measured by a weighing device and transmitted to the data processing unit (9), whereupon the number of articles in the placement region (8) of the load carrier (4) is calculated from a known individual weight of the articles (7) and a known tare weight of the load carrier (4) and taken into account in the detection of the number of articles.

16. The method according to one of claims 11 to 15, **characterized in that** the algorithm for object recognition is optimized in a teaching step using machine learning, on the basis of existing article data and/or stored images of placement regions (8) of load carriers (4), wherein a plurality of images of placement regions (8) or a plurality of images of placement regions (8) and numbers of articles corresponding to the images are fed into a computing unit, wherein the algorithm for object recognition is implemented on the computing unit, whereupon a test run is performed, during which a plurality of images of placement regions (8) are fed into the computing unit, and the corresponding number of articles is ascertained by the computing unit using the algorithm for object recognition.

17. The method according to one of claims 11 to 16, **characterized in that** the object recognition of the data processing unit (9) is optimized during ongoing operation using machine learning on the basis of centrally stored images and numbers of articles corresponding to the images.

18. The method according to one of claims 14 to 17, **characterized in that**, in case of a deviation of the ascertained number of articles from the target value, an input prompt is directed to a user, and a number of articles manually counted by the user is recorded and fed into the data processing unit (9), whereupon the ascertained number of articles is compared to the manually counted number of articles by the data processing unit, and the algorithm for object recognition is adapted based on the comparison.

## Revendications

1. Système (1) pour détecter un certain nombre de marchandises dans une zone de dépôt (8) d'un porte-charge (4) dans un entrepôt de marchandises, comprenant
une zone d'analyse (3) dans laquelle le porte-charge (4) peut être mis à disposition,
un système d'acquisition d'image (2) pour surveiller la zone d'analyse (3),
une unité de traitement de données (9), et
une unité de commande (10),
dans lequel le système d'acquisition d'image (2) est conçu pour prendre une image de la zone de dépôt (8) du porte-charge (4) et la transmettre à l'unité de traitement de données (9),
dans lequel l'unité de traitement de données (9) est configurée pour évaluer une image transmise par le système d'acquisition d'image (2) au moyen d'un algorithme de reconnaissance d'objets afin de reconnaître les marchandises (7) disposées dans la zone de dépôt (8) du porte-charge (4) en tant qu'objets et de déterminer le nombre de marchandises dans la zone de dépôt (8) du porte-charge (4), dans lequel l'algorithme de reconnaissance d'objets est mis en œuvre dans l'unité de traitement de données (9) au moyen d'un apprentissage automatique, dans lequel aux fins de l'apprentissage automatique, une pluralité d'images d'une zone de dépôt (8) respective d'un porte-charge (4) est ou a été fournie à l'unité de traitement de données (9) avec un nombre de marchandises différent, et les images individuelles sont chacune liées au nombre de marchandises correspondant à l'image respective, et
dans lequel l'unité de traitement de données (9) crée une spécification de transport pour le porte-charge (4) sur la base du nombre de marchandises et la transmet à l'unité de commande (10), dans lequel l'unité de commande (10) est conçue pour commander un dispositif de transport (5) de l'entrepôt de marchandises de telle sorte que le dispositif de transport (5) transporte le porte-charge (4) conformément à la spécification de transport, dans lequel le dispositif de transport (5) est conçu comme un convoyeur à bande ou un convoyeur à rouleaux ou comprend des véhicules de transport sans conducteur.

2. Système (1) selon la revendication 1, **caractérisé en ce que** l'unité de traitement de données (9) est conçue pour enregistrer des données de marchandises au moyen de la reconnaissance d'objets et/ou pour recevoir des données de marchandises.

3. Système (1) selon la revendication 1 ou 2, **caractérisé en ce que** le système d'acquisition d'image (2) présente une première caméra (6a) qui est agencée pour saisir l'image sous un premier angle, en particulier à 90°, par rapport à une surface de dépôt du porte-charge (4).

4. Système (1) selon la revendication 3, **caractérisé en ce que** le système d'acquisition d'image (2) comprend au moins une caméra supplémentaire (6b, 6c) qui est agencée pour capturer au moins une image de la zone de dépôt (8) sous un angle supplémentaire, l'angle supplémentaire étant différent du premier angle.

5. Système (1) selon l'une quelconque des revendications 1 à 4, **caractérisé en ce que** le système (1) comprend au moins une unité de détection pour détecter au moins un paramètre de porte-charge, de préférence un poids total du porte-charge (4), dans lequel l'unité de détection transmet le au moins un paramètre de porte-charge à l'unité de traitement de données (9) et l'unité de traitement de données (9) est de préférence conçue pour prendre en compte le paramètre de porte-charge lors d'une évaluation de l'image.

6. Système (1) selon l'une quelconque des revendications 1 à 5, **caractérisé en ce que** l'unité de traitement des données (9) est connectée à un centre de données (12) via un module de communication.

7. Système (1) selon la revendication 6, **caractérisé en ce que** l'unité de traitement de données (9) est conçue pour transmettre et/ou recevoir un ensemble de données, de préférence comprenant une image de la zone de dépôt (8) et/ou le certain nombre de marchandises déterminé, au centre de données (12), dans lequel l'unité de traitement de données (9) optimise la reconnaissance d'objets à l'aide d'ensembles de données reçus.

8. Centre de données (12) pour la gestion d'ensembles de données qui sont enregistrés par un système (1) selon la revendication 7, dans lequel les ensembles de données comprennent chacun au moins une image d'une zone de dépôt (8) d'un porte-charge (4) et un certain nombre de marchandises déterminé, dans lequel le certain nombre de marchandises déterminé indique une pluralité de marchandises dans la zone de dépôt et dans lequel le centre de données (12) est connecté via un module de communication à une pluralité de systèmes (1) selon la revendication 7 pour transférer des ensembles de données entre un système (1) respectif et le centre de données (12).

9. Centre de données (12) selon la revendication 8, **caractérisé en ce qu'**un algorithme d'apprentissage automatique est mis en œuvre dans le centre de données, dans lequel les ensembles de données peuvent être fournis afin d'améliorer un algorithme de reconnaissance d'objets.

10. Système de stockage, comprenant une pluralité de porte-charges (4) avec chacun une zone de dépôt (8), un dispositif de transport (5) pour transporter les porte-charges (4) et un système (1) pour détecter un certain nombre de marchandises dans la zone de dépôt (8) de l'un des porte-charge (4), **caractérisé en ce que** le système (1) est réalisé selon l'une des revendications 1 à 7.

11. Procédé pour enregistrer un certain nombre de marchandises dans une zone de dépôt (8) d'un porte-charge (4) dans un entrepôt de marchandises,
dans lequel le porte-charge (4) est mis à disposition dans une zone d'analyse (3), en particulier dans une zone d'analyse (3) d'un système (1) selon l'une quelconque des revendications 1 à 7,
dans lequel, au moyen d'un système d'acquisition d'image (2), une image de la zone de dépôt (8) du porte-charge (4) est prise et transmise à une unité de traitement de données (9),
dans lequel l'image est évaluée par l'unité de traitement de données (9) au moyen d'un algorithme de reconnaissance d'objets, dans lequel des marchandises (7) qui sont agencées dans la zone de dépôt (8) sont reconnues comme des objets, dans lequel le certain nombre de marchandises est déterminé, après quoi le porte-charge (4) est transporté hors de la zone d'analyse (3), et dans lequel l'algorithme de reconnaissance d'objets est mis en œuvre dans l'unité de traitement de données (9) au moyen d'un apprentissage automatique, dans lequel une pluralité d'images d'une zone de dépôt (8) d'un porte-charge (4) est ou a été introduite dans l'unité de traitement de données (9) avec un certain nombre de marchandises différent et les images individuelles sont chacune liées au nombre de marchandises correspondant à l'image respective, et
dans lequel l'unité de traitement de données (9) crée une spécification de transport pour le porte-charge (4) sur la base du nombre de marchandises et la transmet à une unité de commande (10) du système (1), dans lequel l'unité de commande (10) commande un dispositif de transport (5) de l'entrepôt de marchandises de telle sorte que le dispositif de transport (5) transporte le porte-charge (4) conformément à la spécification de transport, dans lequel le dispositif de transport (5) est conçu comme un convoyeur à bande ou un convoyeur à rouleaux ou comprend des véhicules de transport sans conducteur.

12. Procédé selon la revendication 11, **caractérisé en ce que** le porte-charge (4) est déplacé à une vitesse constante à travers la zone d'analyse (3), l'image étant prise.

13. Procédé selon la revendication 11 ou 12, **caractérisé en ce que** l'image est évaluée en temps réel et la spécification de transport est générée en temps réel.

14. Procédé selon l'une quelconque des revendications 11 à 13, **caractérisé en ce que** le certain nombre de marchandises est comparé à une valeur de consigne, dans lequel le porte-charge (4) est transporté vers un poste de travail lorsque la valeur de consigne est inférieure ou supérieure, ou est transporté vers un emplacement de stockage ou une sortie de marchandises lorsque le certain nombre de marchandises correspond à la valeur de consigne.

15. Procédé selon l'une quelconque des revendications 11 à 14, **caractérisé en ce qu'**un poids total du porte-charge (4) est détecté à l'aide d'un dispositif de pesée et transmis à l'unité de traitement de données (9), après quoi le certain nombre de marchandises dans la zone de dépôt (8) du porte-charge (4) est calculé à partir d'un poids individuel connu des marchandises (7) et d'un poids à vide connu du porte-charge (4) et est pris en compte lors de la détection du certain nombre de marchandises.

16. Procédé selon l'une quelconque des revendications 11 à 15, **caractérisé en ce que** l'algorithme de reconnaissance d'objets, au moyen d'un apprentissage automatique, est optimisé dans une étape d'apprentissage à l'aide de données de marchandises existantes et/ou d'images enregistrées de zones de dépôt (8) de porte-charges (4), dans laquelle une pluralité d'images de zones de dépôt (8) ou une pluralité d'images de zones de dépôts (8) et le nombre de marchandises correspondant aux images sont introduits dans une unité de calcul, sur laquelle l'algorithme de reconnaissance d'objets est mis en œuvre, après quoi un cycle de test est effectué, dans lequel une pluralité d'images de zones de dépôt (8) sont introduites dans l'unité de calcul et le certain nombre de marchandises correspondant est déterminé par l'unité de calcul au moyen de l'algorithme de reconnaissance d'objets.

17. Procédé selon l'une quelconque des revendications 11 à 16, **caractérisé en ce que** la reconnaissance d'objets de l'unité de traitement de données (9) est optimisée pendant le fonctionnement au moyen d'un apprentissage automatique à l'aide d'images stockées de manière centrale et de certains nombres de marchandises correspondants à celles-ci.

18. Procédé selon l'une quelconque des revendications 14 à 17, **caractérisé en ce qu'**en cas d'écart du certain nombre de marchandises déterminé par rapport à la valeur de consigne, une demande d'entrée est adressée à un utilisateur et un certain nombre de marchandises compté manuellement par l'utilisateur est détecté et introduit dans l'unité de traitement de données (9), après quoi le certains nombre de marchandises déterminé est comparé par l'unité de traitement de données au nombre de marchandises compté manuellement et l'algorithme de reconnaissance d'objets est adapté à l'aide de la comparaison.
